# EUROPEAN PATENT SPECIFICATION

(11) **EP 1 423 465 B1**
(45) Date of publication and mention of the grant of the patent: **27.05.2009**
(21) Application number: 02794707.6
(22) Date of filing: 06.08.2002
(51) Int. Cl.: C08K 5/16, C08L 27/12

(54) **FLAME RETARDANT COMPOSITIONS**
FLAMMWIDRIGE ZUSAMMENSETZUNGEN
COMPOSITIONS IGNIFUGES

(30) Priority: 15.08.2001 US 312517 P
(43) Date of publication of application: 02.06.2004
(73) Proprietor: Ciba Holding Inc., 4057 Basel (CH)
(72) Inventor: KAPRINIDIS, Nikolas, New York, NY 10001 (US); HORSEY, Douglas Wayne, Briarcliff Manor, NY 10510 (US)
(74) Representative: Bohest AG
(86) International application number: PCT/EP2002/008767
(87) International publication number: WO 2003/016388

(56) References cited:
- EP-A- 0 465 927
- US-A- 6 103 796
- DATABASE CA [Online] CHEMICAL ABSTRACTS SERVICE, COLUMBUS, OHIO, US; ISHII, HIROMITSU ET AL: "Fire -resistant poly(butylene terephthalate) compositions and their metal-inserted moldings as machinery, electronic, and automobile parts" retrieved from STN Database accession no. 133:336259 XP002224228 & JP 2000 309692 A (TORAY INDUSTRIES, INC., JAPAN) 7 November 2000 (2000-11-07)
- DATABASE CA [Online] CHEMICAL ABSTRACTS SERVICE, COLUMBUS, OHIO, US; BESPALOVA, ZHANNA I. ET AL: "Composition for a fire -resistant, antiadhesive, anticorrosive coating produced by a heteroadagulation method" retrieved from STN Database accession no. 128:49530 XP002224229 & RU 2 087 506 C (NOVOCHERKASSKIJ GOSUDARSTVENNYJ TEKHNICHESKIJ UNIVERSITET, USSR) 20 August 1997 (1997-08-20)

## Description

The instant invention pertains to a novel method of flame retarding a polymeric substrate by adding thereto an effective flame retarding amount of a synergistic mixture of a sterically hindered amine of the nitroxyl, hydroxylamine, alkoxyamine or hydroxyalkoxyamine class and a fluorinated polyolefin, together with a halogenated flame retardant and to a corresponding novel composition.

### Background of the Invention

Hydroxylamine, alkoxyamine or hydroxyalkoxyamine functional sterically hindered amines are known as light stabilizers for organic polymers (US patents Nos. 4,831,134, 5,004,770; 5,096,950; 5,204,473; 6,117,995; or GB-A-2,347,928).

United States Patent No. 5,393,812 describes polyolefin compositions which are made flame retardant by a combination of a halogenated hydrocarbyl phosphate or phosphonate ester flame retardant in combination with an alkoxyamine functional hindered amine. There is no suggestion that the hindered amine itself is responsible for the flame retardancy, but rather that the hindered amine is preventing delustering and other undesirable effects from occurring in these polyolefin compositions.

U.S. Pat. No. 6,309,987 and equivalent WO 99/54530 teach polyolefin non-woven flame retardant fabrics that comprise N-alkoxyamines.

European Application No. 0 792 911 A2, discloses that alkoxyamine functional hindered amines are effective when used to enhance the flame retarding efficacy of tris(trihalogenopentyl) phosphate flame retardants.

U.S. Pat. No. 6,117,995 and copending U.S. application No. 09/525,529, filed Feb. 17, 2000, disclose that certain N-alkoxy or N-hydroxyalkoxy hindered amines may be used as flame retardants for organic polymers. WO 99/00450 and copending U.S. application No. 60/277,222, filed Mar. 20, 2001, disclose the use of certain sterically hindered amine ethers, aminoxides or hydroxylamines alone or in combination with other components as flame retardants.

U.S. Pat. No. 5,844,026 discloses polyolefin compositions comprising certain NOR hindered amines and certain conventional flame retardants.

U.S. Pat. No. 6,271,377 discloses polyolefin compositions that comprise N-hydroxyalkoxy hindered amines and a halogenated flame retardant.

A Revolutionary UV Stable Flame Retardant System for Polyolefins - R. Srinivasan, A. Gupta and D. Horsey, Int. Conf. Addit. Polyolefins 1998, 69-83, teaches polyolefins comprising certain NOR hindered amines with halogen and phosphorus containing conventional flame retardants.

Advances in a Revolutionary Flame Retardant System for Polyolefins - R. Srinivasan, B. Rotzinger, Polyolefins 2000, Int. Conf. Polyolefins 2000, 571-581, teaches polyolefins comprising certain NOR hindered amines with brominated and phosphorus containing flame retardants.

The flame retardant (FR) market today is comprised of products which function to interfere with the combustion process by chemical and/or physical means. Mechanistically these FRs have been proposed to function during combustion of an article in either the gas phase, the condensed phase or both. The organohalogens are proposed to generate halogen species (e.g. HX) which interferes in the gas phase with free radical organic "fuel" from the polymer substrate. Synergists are proposed to react with HX to form additional chemical species with interfere with combustion in the gas phase, such as reaction of antimony oxide with HX to form antimony halide and water vapor. Antimony compounds such as antimony trioxide also act as a radical scavenger forming antimony halides. Thus, it can inhibit the propagation of the fire.

Although antimony compounds are efficient in terms of cost performance, it recently raised a lot of concern because of the toxicity of the byproducts which are formed during combustion in the presence of a halogenated flame retardant. Antimony oxides often contain trace amounts of arsenic compounds which are suspected carcinogens. Because of these ecological concerns, there is a motion to replace antimony trioxide in the present commercial flame retardant applications. However, it is very difficult to find an effective synergist which is both enviromentally friendly and efficient as far as the cost performance is concerned.

Another reason to add flame retardant additives is to prevent dripping during the application of the fire. Dripping during combustion is the process of the separation of parts of the polymer from the matrix in the shape of droplets. Most often, the droplets are flaming and are imposing tremendous danger for fire spread. It is a common measure to add fillers such talc in large amounts to the polymer, with some negative consequences on the mechanical properties. Other fillers sometimes used include calcium carbonate, magnesium carbonate, zinc borate, silicates, silicones, glass fibres, glass bulbs, asbestos, kaolin, mica, barium sulfate, calcium sulfate, metal oxides, hydrates and hydroxides such as zinc oxide, magnesium hydroxide, alumina trihydrate, silica, calcium silicate, magnesium silicate. The action of fluoro polymers such as polytetrafluoroethylene (PTFE) as an anti-dripping agent in some specific flame retardant polymer compositions has also been described, see US patents Nos. 3,671,487; 4,355,126 and 4,579,906.

In this invention, it has been found that polymers may retain their mechanical strength and good mold surfaces while achieving good flame retardant properties when a sterically hindered amine of the nitroxyl, hydroxylamine, alkoxyamine or hydroxyalkoxyamine class is added together with a fluorinated polyolefin and a halogenated flame retardant. With this combination, antimony compounds and fillers may be largely reduced or replaced. As the instant sterically hindered amines of the nitroxyl, hydroxylamine, alkoxyamine or hydroxyalkoxyamine class are also active as stabilizers, the polymer compositions of the invention are efficiently protected from the deleterious effects of light, oxygen and/or heat.

### Detailed Disclosure

The instant invention pertains to a flame retardant composition which comprises
(A) an organic polymer substrate,
(B) an effective flame retarding amount of a synergistic mixture of
   (i.) a sterically hindered amine of the nitroxyl, hydroxylamine, alkoxyamine or hydroxyalkoxyamine class and
   (ii.) a fluorinated polyolefin and
   (iii.) at least one compound selected from the group consisting of the halogenated flame retardants.

Components A, B(i.), B(ii.) and optional further components may comprise one or a mixture of more than one chemical species.

Advantageously, present composition contains only minor amounts of antimony compounds such as Sb₂O₃, e.g. less than 1 %, preferably less than 0.1 % by weight of the polymer component A; most preferably, present composition is essentially free of antimony.

Fillers are not required in order to improve the flame retardant properties and achieve a higher rating, e.g. in the UL-94 burning test (see below). Consequently, a preferred composition of the invention contains only minor amounts of fillers, e.g. less than than 3 %, more preferably less than 1 %, most preferably less than 0.1 % by weight of the polymer component A; most preferably, present composition is essentially free of fillers.

It is noteworthy to mention that combinations of present components (i) and (ii), or components (ii) and (iii), or components (i) and (iii) alone do not result in a similar flame retardant efficacy. It is a requirement that the combination of the three additives of the invention as defined for component B above, preferably at the specific levels given below, has to be used in order to achieve a high rating.

The polymeric substrate of component (A) is any of a wide variety of polymeric types including polyolefins, polystyrenics, and PVC. For example, the polymer substrate may be selected from the group of resins consisting of the polyolefins, the thermoplastic olefins, styrenic polymers and copolymers, ABS and polymers which contain hetero atoms, double bonds or aromatic rings. Specific embodiments are where component (A) is polypropylene, polyethylene, thermoplastic olefin (TPO), ABS or high impact polystyrene.

For example, the polymer substrate is selected from the group of resins consisting of the polyolefins, the thermoplastic olefins, styrenic polymers and copolymers, and ABS.

Another embodiment of the present invention is where the polymer substrate is selected from the group consisting of polypropylene, polyethylene, thermoplastic olefin (TPO), ABS and high impact polystyrene.

For instance, the polymer substrate is polypropylene, polyethylene or thermoplastic olefin (TPO). Organic polymers of component A are preferably thermoplastic polymers such as polyolefins like polyethylene, polypropylene or copolymers thereof. Most preferred is polypropylene.

Further examples for organic polymers (component A) are:
1. Polymers of monoolefins and diolefins, for example polypropylene, polyisobutylene, polybut-1-ene, poly-4-methylpent-1-ene, polyvinylcyclohexane, polyisoprene or polybutadiene, as well as polymers of cycloolefins, for instance of cyclopentene or norbornene, polyethylene (which optionally can be crosslinked), for example high density polyethylene (HDPE), high density and high molecular weight polyethylene (HDPE-HMW), high density and ultrahigh molecular weight polyethylene (HDPE-UHMW), medium density polyethylene (MDPE), low density polyethylene (LDPE), linear low density polyethylene (LLDPE), (VLDPE) and (ULDPE).
   Polyolefins, i.e. the polymers of monoolefins exemplified in the preceding paragraph, preferably polyethylene and polypropylene, can be prepared by different, and especially by the following, methods:
   a) radical polymerisation (normally under high pressure and at elevated temperature).
   b) catalytic polymerisation using a catalyst that normally contains one or more than one metal of groups IVb, Vb, Vlb or VIII of the Periodic Table. These metals usually have one or more than one ligand, typically oxides, halides, alcoholates, esters, ethers, amines, alkyls, alkenyls and/or aryls that may be either n- or σ-coordinated. These metal complexes may be in the free form or fixed on substrates, typically on activated magnesium chloride, titanium(III) chloride, alumina or silicon oxide. These catalysts may be soluble or insoluble in the polymerisation medium. The catalysts can be used by themselves in the polymerisation or further activators may be used, typically metal alkyls, metal hydrides, metal alkyl halides, metal alkyl oxides or metal alkyloxanes, said metals being elements of groups Ia, IIa and/or IIIa of the Periodic Table. The activators may be modified conveniently with further ester, ether, amine or silyl ether groups. These catalyst systems are usually termed Phillips, Standard Oil Indiana, Ziegler (-Natta), TNZ (DuPont), metallocene or single site catalysts (SSC).
2. Mixtures of the polymers mentioned under 1), for example mixtures of polypropylene with polyisobutylene, polypropylene with polyethylene (for example PP/HDPE, PP/LDPE) and mixtures of different types of polyethylene (for example LDPE/HDPE).
3. Copolymers of monoolefins and diolefins with each other or with other vinyl monomers, for example ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, ethylene/vinylcyclohexane copolymers, ethylene/cycloolefin copolymers (e.g. ethylene/norbornene like COC), ethylene/1-olefins copolymers, where the 1-olefin is generated in-situ; propylene/butadiene copolymers, isobutylene/isoprene copolymers, ethylene/vinylcyclohexene copolymers, ethylene/alkyl acrylate copolymers, ethylene/alkyl methacrylate copolymers, ethylene/vinyl acetate copolymers or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethyleneacrylic acid copolymers (EAA), LLDPE/EVA, LLDPE/EAA and alternating or random polyalkylene/carbon monoxide copolymers and mixtures thereof with other polymers, for example polyamides.
4. Hydrocarbon resins (for example C₅-C₉) including hydrogenated modifications thereof (e.g. tackifiers) and mixtures of polyalkylenes and starch.
   Homopolymers and copolymers from 1.) - 4.) may have any stereostructure including syndiotactic, isotactic, hemi-isotactic or atactic; where atactic polymers are preferred. Stereoblock polymers are also included.
5. Polystyrene, poly(p-methylstyrene), poly(α-methylstyrene).
6. Aromatic homopolymers and copolymers derived from vinyl aromatic monomers including styrene, α-methylstyrene, all isomers of vinyl toluene, especially p-vinyltoluene, all isomers of ethyl styrene, propyl styrene, vinyl biphenyl, vinyl naphthalene, and vinyl anthracene, and mixtures thereof. Homopolymers and copolymers may have any stereostructure including syndiotactic, isotactic, hemi-isotactic or atactic; where atactic polymers are preferred. Stereoblock polymers are also included.
6a. Copolymers including aforementioned vinyl aromatic monomers and comonomers selected from ethylene, propylene, dienes, nitriles, acids, maleic anhydrides, maleimides, vinyl acetate and vinyl chloride or acrylic derivatives and mixtures thereof, for example styrene/butadiene, styrene/acrylonitrile, styrene/ethylene (interpolymers), styrene/alkyl methacrylate, styrene/butadiene/alkyl acrylate, styrene/butadiene/alkyl methacrylate, styrene/maleic anhydride, styrene/acrylonitrile/methyl acrylate; mixtures of high impact strength of styrene copolymers and another polymer, for example a polyacrylate, a diene polymer or an ethylene/propylene/diene terpolymer; and block copolymers of styrene such as styrene/butadiene/styrene, styrene/isoprene/styrene, styrene/ethylene/butylene/styrene or styrene/ethylene/propylene/styrene.
6b. Hydrogenated aromatic polymers derived from hydrogenation of polymers mentioned under 6.), especially including polycyclohexylethylene (PCHE) prepared by hydrogenating atactic polystyrene, often referred to as polyvinylcyclohexane (PVCH).
6c. Hydrogenated aromatic polymers derived from hydrogenation of polymers mentioned under 6a.).
   Homopolymers and copolymers may have any stereostructure including syndiotactic, isotactic, hemi-isotactic or atactic; where atactic polymers are preferred. Stereoblock polymers are also included.
7. Graft copolymers of vinyl aromatic monomers such as styrene or α-methylstyrene, for example styrene on polybutadiene, styrene on polybutadiene-styrene or polybutadiene-acrylonitrile copolymers; styrene and acrylonitrile (or methacrylonitrile) on polybutadiene; styrene, acrylonitrile and methyl methacrylate on polybutadiene; styrene and maleic anhydride on polybutadiene; styrene, acrylonitrile and maleic anhydride or maleimide on polybutadiene; styrene and maleimide on polybutadiene; styrene and alkyl acrylates or methacrylates on polybutadiene; styrene and acrylonitrile on ethylene/propylene/diene terpolymers; styrene and acrylonitrile on polyalkyl acrylates or polyalkyl methacrylates, styrene and acrylonitrile on acrylate/butadiene copolymers, as well as mixtures thereof with the copolymers listed under 6), for example the copolymer mixtures known as ABS, MBS, ASA or AES polymers.
8. Halogen-containing polymers such as polychloroprene, chlorinated rubbers, chlorinated and brominated copolymer of isobutylene-isoprene (halobutyl rubber), chlorinated or sulfochlorinated polyethylene, copolymers of ethylene and chlorinated ethylene, epichlorohydrin homo- and copolymers, especially polymers of halogen-containing vinyl compounds, for example polyvinyl chloride, polyvinylidene chloride, polyvinyl fluoride, polyvinylidene fluoride, as well as copolymers thereof such as vinyl chloride/vinylidene chloride, vinyl chloride/vinyl acetate or vinylidene chloride/vinyl acetate copolymers.
9. Polymers derived from α,β-unsaturated acids and derivatives thereof such as polyacrylates and polymethacrylates; polymethyl methacrylates, polyacrylamides and polyacrylonitriles, impact-modified with butyl acrylate.
10. Copolymers of the monomers mentioned under 9) with each other or with other unsaturated monomers, for example acrylonitrile/ butadiene copolymers, acrylonitrile/alkyl acrylate copolymers, acrylonitrile/alkoxyalkyl acrylate or acrylonitrile/vinyl halide copolymers or acrylonitrile/ alkyl methacrylate/butadiene terpolymers.
11. Polymers derived from unsaturated alcohols and amines or the acyl derivatives or acetals thereof, for example polyvinyl alcohol, polyvinyl acetate, polyvinyl stearate, polyvinyl benzoate, polyvinyl maleate, polyvinyl butyral, polyallyl phthalate or polyallyl melamine; as well as their copolymers with olefins mentioned in 1) above.
12. Homopolymers and copolymers of cyclic ethers such as polyalkylene glycols, polyethylene oxide, polypropylene oxide or copolymers thereof with bisglycidyl ethers.
13. Polyacetals such as polyoxymethylene and those polyoxymethylenes which contain ethylene oxide as a comonomer; polyacetals modified with thermoplastic polyurethanes, acrylates or MBS.
14. Polyphenylene oxides and sulfides, and mixtures of polyphenylene oxides with styrene polymers or polyamides.
15. Polyurethanes derived from hydroxyl-terminated polyethers, polyesters or polybutadienes on the one hand and aliphatic or aromatic polyisocyanates on the other, as well as precursors thereof.
16. Polyamides and copolyamides derived from diamines and dicarboxylic acids and/or from aminocarboxylic acids or the corresponding lactams, for example polyamide 4, polyamide 6, polyamide 6/6, 6/10, 6/9, 6/12, 4/6, 12/12, polyamide 11, polyamide 12, aromatic polyamides starting from m-xylene diamine and adipic acid; polyamides prepared from hexamethylenediamine and isophthalic or/and terephthalic acid and with or without an elastomer as modifier, for example poly-2,4,4,-trimethylhexamethylene terephthalamide or poly-m-phenylene isophthalamide; and also block copolymers of the aforementioned polyamides with polyolefins, olefin copolymers, ionomers or chemically bonded or grafted elastomers; or with polyethers, e.g. with polyethylene glycol, polypropylene glycol or polytetramethylene glycol; as well as polyamides or copolyamides modified with EPDM or ABS; and polyamides condensed during processing (RIM polyamide systems).
17. Polyureas, polyimides, polyamide-imides, polyetherimids, polyesterimids, polyhydantoins and polybenzimidazoles.
18. Polyesters derived from dicarboxylic acids and diols and/or from hydroxycarboxylic acids or the corresponding lactones, for example polyethylene terephthalate, polybutylene terephthalate, poly-1,4-dimethylolcyclohexane terephthalate, polyalkylene naphthalate (PAN) and polyhydroxybenzoates, as well as block copolyether esters derived from hydroxyl-terminated polyethers; and also polyesters modified with polycarbonates or MBS.
19. Polycarbonates and polyester carbonates.
20. Polyketones.
21. Polysulfones, polyether sulfones and polyether ketones.
22. Blends of the aforementioned polymers (polyblends), for example PP/EPDM, Polyamide/EPDM or ABS, PVC/EVA, PVC/ABS, PVC/MBS, PC/ABS, PBTP/ABS, PC/ASA, PC/PBT, PVC/CPE, PVC/acrylates, POM/thermoplastic PUR, PC/thermoplastic PUR, POM/acrylate, POM/MBS, PPO/HIPS, PPO/PA 6.6 and copolymers, PA/HDPE, PA/PP, PA/PPO, PBT/PC/ABS or PBT/PET/PC.

### Component (i)

The sterically hindered amine of the nitroxyl, hydroxylamine, alkoxyamine or hydroxyalkoxyamine class usually contains at least one active moiety of the formula (I) or (II) 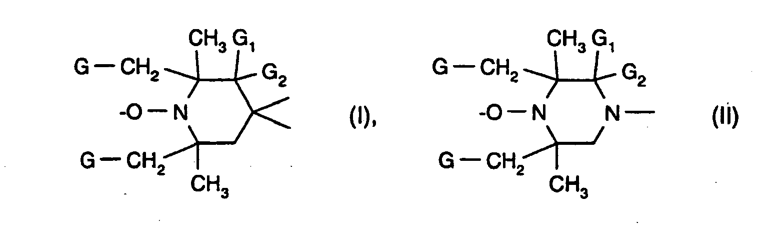
in which G is hydrogen or methyl, and
G₁ and G₂, independently of one another, are hydrogen, methyl or together are a substituent =O.

Also important are compounds containing a group of the formula 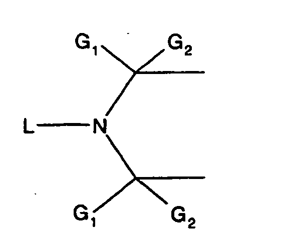
where G₁ and G₂ are independently alkyl of 1 to 4 carbon atoms or are together pentamethylene,
L is O, OH or O-E₁; and
E₁ is C₁-C₁₈alkyl, C₅-C₁₂cycloalkyl or C₇-C₁₅aralkyl; or E₁ is C₁-C₁₈alkyl, C₅-C₁₂cycloalkyl or C₇-C₁₅aralkyl each of which is substituted in the aliphatic part by 1-3 OH groups;
or is an oligomeric or polymeric hindered amine molecule made from the reaction of a dialkyl ester or isocyanate with a compound of the formula (I') 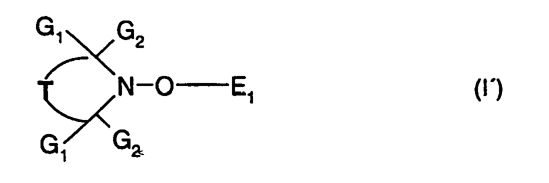
wherein G₁ and G₂ are as defined above, and wherein E₁ contains 1 OH group and
T is -CH₂-CH(OH)-CH₂-;
or is a simple diester or urethane derivative of a compound of the formula (I) wherein
E₁ contains 1 OH group and T is -CH₂-CH(OH)-CH₂-.

The molecular weight of this component usually is in the range 170 - 10000 g/mol, preferably 500 - 5000 g/mol (number average as determined by GPC).

Conveniently employed are compounds that contain one or more of the groups of the formula (II') 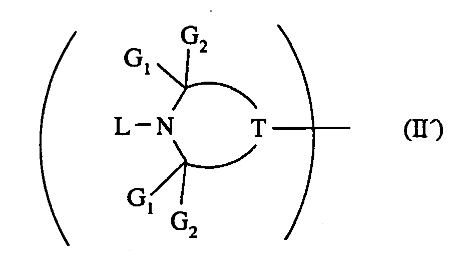 wherein
T is a group forming a five- or six-membered ring; and
L, G₁ and G₂ are as defined above.

Two or more nitroxyl groups of the above formulae may be present in the same molecule by being linked through the T moiety as exemplified below where E is a linking group:

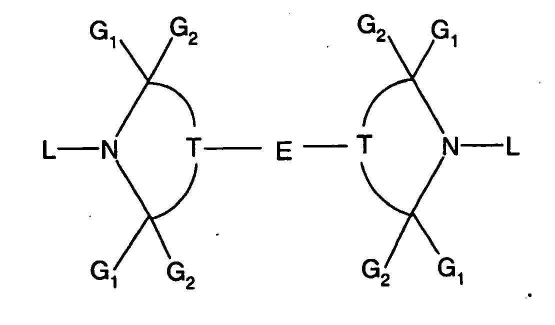

Preferably, G₁ and G₂ are each methyl.

Of special technical importance are compounds conforming to the above formula when L is O-E₁ and E₁ is methylene-OH, ethylene-OH, 2-propylene-OH or 2-methyl-2-propylene-OH.

When E₁ contains no OH group, it is preferably C₁-C₁₈alkyl or cyclohexyl.

When E₁ contains 1 OH group, it is a carbon-centered radical or diradical formed preferably from 2-methyl-2-propanol, 2-propanol, 2,2-dimethyl-1-propanol, 2-methyl-2-butanol, ethanol, 1-propanol, 1-butanol, 1-pentanol, 1-hexanol, 1-nonanol, 1-decanol, 1-dodecanol, 1-octadecanol, 2-butanol, 2-pentanol, 2-ethyl-1-hexanol, cyclohexanol, cyclooctanol, allyl alcohol, phenethyl alcohol or 1-phenyl-1-ethanol; most preferably from 2-methyl-2-propanol (= tert-butyl alcohol) or cyclohexanol.

When E₁ contains 2 OH groups, it is a carbon-centered radical or diradical formed preferably from 1,2-ethanediol, 1,2-propanedial, 1,3-propanediol, 1,2-butanediol, 1,3-butanediol, 1,4-butanediol, 2,2-dimethyl-1,3-propanediol, 1,2-cyclohexanediol, 1,3-cyclohexanediol or 1,4-cyclohexanediol; most preferably from 1,4-butanediol, 2,2-dimethyl-1,3-propanediol, 1,2-cyclohexanediol, 1,3-cyclohexanediol or 1,4-cyclohexanediol.

When E₁ contains 3 OH groups, it is a carbon-centered radical or diradical formed from glycerol, 1,1,1-tris(hydroxymethyl)methane, 2-ethyl-2-(hydroxymethyl-1,3-propanediol, 1,2,4-butanetriol or 1,2,6-hexanetriol; most preferably from glycerol, 1,1,1-tris(hydroxymethyl)methane, 2-ethyl-2-(hydroxymethyl)-1,3-propanediol.

Useful hindered amines when part of a compound of component (i) include those of the general formulas: 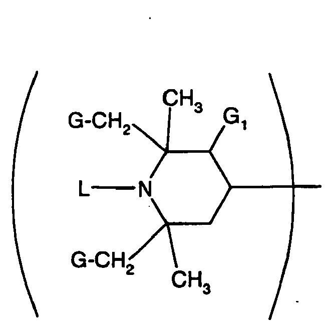 and 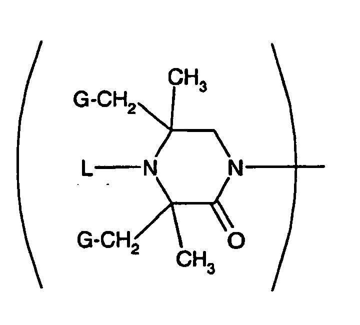 wherein L is as described above and each of G and G₁ is independently selected from hydrogen or methyl. Also included are amine oxides containing more than one hindered amine and more than one saturated amine oxide per molecule. Preferred are sterically hindered amines of the alkoxyamine or hydroxyalkoxyamine class, i.e. those wherein L is -O-E₁.

More preferably, compounds of present component (i) conform to formulas as described below under classes (a') to (m').

### (a') A compound of the formula (1a)

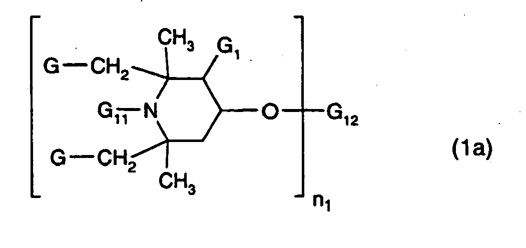

in which n₁ is a number from 1 to 4, G and G₁, independently of one another, are hydrogen or methyl,
G₁₁ is O; hydroxyl, C₁-C₁₈alkoxy, C₅-C₁₂cycloalkoxy, C₇-C₁₅phenylalkoxy; or G₁₁ is C₁-C₁₈alkoxy, C₅-C₁₂cycloalkoxy or C₇-C₁₅phenylalkoxy each of which is substituted in the aliphatic part by 1-3 OH groups; G₁₁ preferably being C₁-C₁₂alkoxy or cyclohexyloxy or C₂-C₈hydroxyalkoxy, especially octyloxy, cyclohexyloxy or 2-hydroxy-2-methylpropoxy, and G₁₂, if n₁ is 1, is hydrogen, C₁-C₁₈alkyl which is uninterrupted or interrupted by one or more oxygen atoms, COO and/or CONH groups, or is cyanoethyl, benzoyl, glycidyl, a monovalent radical of an aliphatic, cycloaliphatic, araliphatic, unsaturated or aromatic carboxylic acid, carbamic acid or phosphorus-containing acid or a monovalent silyl radical, preferably a radical of an aliphatic carboxylic acid having 2 to 18 carbon atoms, of a cycloaliphatic carboxylic acid having 7 to 15 carbon atoms, or an α,β-unsaturated carboxylic acid having 3 to 5 carbon atoms or of an aromatic carboxylic acid having 7 to 15 carbon atoms, where each carboxylic acid can be substituted in the aliphatic, cycloaliphatic or aromatic moiety by 1 to 3 -COOZ₁₂ groups, in which Z₁₂ is H, C₁-C₂₀alkyl, C₃-C₁₂alkenyl, C₅-C₇cycloalkyl, phenyl or benzyl,
G₁₂, if n₁ is 2, is C₂-C₁₂alkylene, C₄-C₁₂alkenylene, xylylene, a divalent radical of an aliphatic, cycloaliphatic, araliphatic or aromatic dicarboxylic acid, dicarbamic acid or phosphorus-containing acid or a divalent silyl radical, preferably a radical of an aliphatic dicarboxylic acid having 2 to 36 carbon atoms, or a cycloaliphatic or aromatic dicarboxylic acid having 8-14 carbon atoms or of an aliphatic, cycloaliphatic or aromatic dicarbamic acid having 8-14 carbon atoms, where each dicarboxylic acid may be substituted in the aliphatic, cycloaliphatic or aromatic moiety by one or two -COOZ₁₂ groups,
G₁₂, if n₁ is 3, is a trivalent radical of an aliphatic, cycloaliphatic or aromatic tricarboxylic acid, which may be substituted in the aliphatic, cycloaliphatic or aromatic moiety by -COOZ₁₂, of an aromatic tricarbamic acid or of a phosphorus-containing acid, or is a trivalent silyl radical, preferred radicals including triacyl radicals of nitrilo triacetic acid of benzene tricarboxylic acid,
and G₁₂, if n₁ is 4, is a tetravalent radical of an aliphatic, cycloaliphatic or aromatic tetracarboxylic acid.

The carboxylic acid radicals mentioned above are in each case taken to mean radicals of the formula (-CO)ₓR, where x is as defined above for n₁, and the meaning of R arises from the definition given above.

Alkyl with up to 20 carbon atoms is, for example, methyl, ethyl, n-propyl, n-butyl, sec-butyl, tert-butyl, n-hexyl, n-octyl, 2-ethylhexyl, n-nonyl, n-decyl, n-undecyl, n-dodecyl, n-tridecyl, n-tetradecyl, n-hexadecyl or n-octadecyl.

C₁-C₁₈alkoxy G₁₁ is, for example, methoxy, ethoxy, propoxy, isopropoxy, butoxy, isobutoxy, pentoxy, isopentoxy, hexoxy, heptoxy, octoxy, decyloxy, dodecyloxy, tetradecyloxy, hexadecyloxy and octadecyloxy. C₆-C₁₂alkoxy, in particular heptoxy and octoxy, is preferred.

C₅-C₁₂cycloalkoxy G₁₁ is, for example, cyclopentoxy, cyclohexoxy, cycloheptoxy, cyclooctoxy, cyclodecyloxy and cyclododecyloxy. C₅-C₈cycloalkoxy, in particular cyclopentoxy and cyclohexoxy, is preferred.

C₇-C₉phenylalkoxy is, for example, benzyloxy.

G₁₁ as C₁-C₁₈alkoxy, C₅-C₁₂cycloalkoxy or C₇-C₁₅phenylalkoxy substituted in the aliphatic part by 1-3 OH groups is a radical formed by abstraction of an carbon-bonded hydrogen atom preferably from 2-methyl-2-propanol (tert.-butanol), 2-propanol, 2,2-dimethyl-1-propanol, 2-methyl-2-butanol, ethanol, 1-propanol, 1-butanol, 1-pentanol, 1-hexanol, 1-nonanol, 1-decanol, 1-dodecanol, 1-octadecanol, 2-butanol, 2-pentanol, 2-ethyl-1-hexanol, cyclohexanol, cyclooctanol, allyl alcohol, phenethyl alcohol or 1-phenyl-1-ethanol; 1,2-ethanediol, 1,2-propanedial, 1,3-propanediol, 1,2-butanediol; 1,3-butanediol, 1,4-butanediol, 2,2-dimethyl-1,3-propanediol, 1,2-cyclohexanediol, 1,3-cyclohexanediol or 1,4-cyclohexanediol; glycerol, 1,1,1-tris(hydroxymethyl)methane, 2-ethyl-2-(hydroxymethyl-1,3-propanediol, 1,2,4-butanetriol or 1,2,6-hexanetriol.

More preferably, G₁₁ is are formed from 2-methyl-2-propanol or cyclohexanol, 1,4-butanediol, 2,2-dimethyl-1,3-propanediol, 1,2-cyclohexanediol, 1,3-cyclohexanediol or 1,4-cyclohexanediol. Most preferred hydroxy substituted G₁₁ is 2-hydroxy-2-methylpropoxy.

Examples of several G₁₂ radicals are given below.

If G₁₂ is a monovalent radical of a carboxylic acid, it is, for example, an acetyl, caproyl, stearoyl, acryloyl, methacryloyl, benzoyl or β-(3,5-di-tert-butyl-4-hydroxyphenyl)propionyl radical.

If G₁₂ is a monovalent silyl radical, it is, for example, a radical of the formula -(CⱼH₂ⱼ)-Si(Z')₂Z", in which j is an integer in the range from 2 to 5, and Z' and Z", independently of one another, are C₁-C₄alkyl or C₁-C₄alkoxy.

If G₁₂ is a divalent radical of a dicarboxylic acid, it is, for example, a malonyl, succinyl, glutaryl, adipoyl, suberoyl, sebacoyl, maleoyl, itaconyl, phthaloyl, dibutylmalonyl, dibenzylmalonyl, butyl(3,5-di-tert-butyl-4-hydroxybenzyl)malonyl or bicycloheptenedicarbonyl radical or a group of the formula

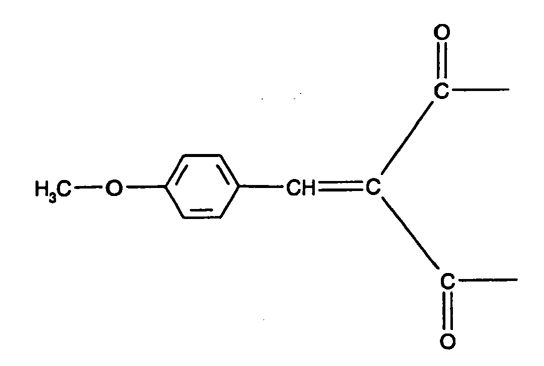

If G₁₂ is a trivalent radical of a tricarboxylic acid, it is, for example, a trimellitoyl, citryl or nitrilotriacetyl radical.

If G₁₂ is a tetravalent radical of a tetracarboxylic acid, it is, for example, the tetravalent radical of butane-1,2,3,4-tetracarboxylic acid or of pyromellitic acid.

If G₁₂ is a divalent radical of a dicarbamic acid, it is, for example, hexamethylenedicarbamoyl or 2,4-toluylenedicarbamoyl radical.

Preference is given to compounds of the formula (1a) in which G and G₁ are hydrogen, G₁₁ is hydrogen or methyl, n₁ is 2 and G₁₂ is the diacyl radical of an aliphatic dicarboxylic acid having 4-12 carbon atoms.

### (b') A compound of the formula (1b)

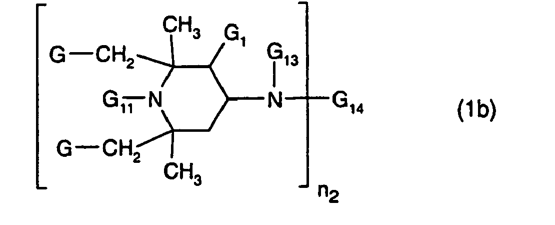

in which n₂ is the number 1, 2 or 3, and G, G₁ and G₁₁ are as defined under (a'), G₁₃ is hydrogen, C₁-C₁₂alkyl, C₂-C₅hydroxyalkyl, C₅-C₇cydoalkyl, C₇-C₈aralkyl, C₁-C₁₈alkanoyl, C₃-C₅alkenoyl, benzoyl or a group of the formula 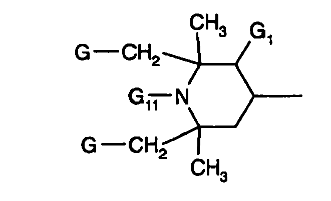
and G₁₄, if n₂ is 1, is hydrogen, C₁-C₁₈alkyl, C₃-C₈alkenyl, C₅-C₇cycloalkyl, C₁-C₄alkyl which is substituted by a hydroxyl, cyano, alkoxycarbonyl or carbamide group or group of the formula -CONH-Z, or G₁₄ is glycidyl, a group of the formula -CH₂-CH(OH)-Z or of the formula -CONH-Z, in which Z is hydrogen, methyl or phenyl or CH₂-OZ₁₄ with Z₁₄ being hydrogen or C₁-C₁₈alkyl;
G₁₄, if n₂ is 2, is C₂-C₁₂alkylene, C₆-C₁₂arylene, xylylene, a -CH₂-CH(OH)-CH₂ group or a
-CH₂-CH(OH)-CH₂-O-D-O- group, in which D is C₂-C₁₀alkylene, C₆-C₁₅arylene, C₆-C₁₂cycloalkylene, or, provided that G₁₃ is not alkanoyl, alkenoyl or benzoyl, G₁₄ can alternatively be 1-oxo-C₂-C₁₂alkylene, a divalent radical of an aliphatic, cycloaliphatic or aromatic dicarboxylic acid or dicarbamic acid or alternatively the group -CO-,
G₁₄, if n₂ is 3, is a group 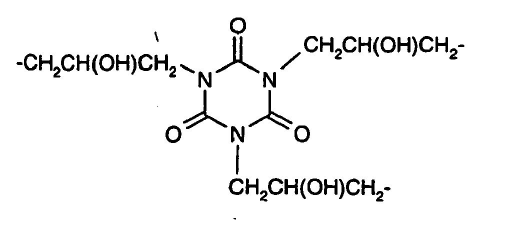
or, if n₂ is 1, G₁₃ and G₁₄ together can be the divalent radical of an aliphatic, cycloaliphatic or aromatic 1,2- or 1,3-dicarboxylic acid.

Some examples for the radicals G₁₃, G₁₄ and D are given below.

Any alkyl substituents are as defined above for (a').

Any C₅-C₇cycloalkyl substituents are, in particular, cyclohexyl.

C₇-C₈aralkyl G₁₃ is, in particular, phenylethyl or especially benzyl.

C₂-C₅hydroxyalkyl G₁₃ is, in particular, 2-hydroxyethyl or 2-hydroxypropyl.

C₁-C₁₈alkanoyl G₁₃ is, for example, formyl, acetyl, propionyl, butyryl, octanoyl, dodecanoyl, hexadecanoyl, octadecanoyl, but preferably acetyl, and C₃-C₅alkenoyl G₁₃ is, in particular, acryloyl.

C₂-C₈alkenyl G₁₄ is, for example, allyl, methallyl, 2-butenyl, 2-pentenyl, 2-hexenyl or 2-octenyl.

G₁₄ as a hydroxyl-, cyano-, alkoxycarbonyl- or carbamide-substituted C₁-C₄alkyl can be, for example, 2-hydroxyethyl, 2-hydroxypropyl, 2-cyanoethyl, methoxycarbonylmethyl, 2-ethoxycarbonylethyl, 2-aminocarbonylpropyl or 2-(dimethylaminocarbonyl)ethyl.

Any C₂-C₁₂alkylene radicals are, for example, ethylene, propylene, 2,2-dimethylpropylene, tetramethylene, hexamethylene, octamethylene, decamethylene or dodecamethylene.

Any C₆-C₁₅arylene substituents are, for example, o-, m- or p-phenylene, 1,4-naphthylene or 4,4'-diphenylene.

C₆-C₁₂cycloalkylene is, in particular, cyclohexylene.

G₁₄ as 1-oxo-C₂-C₁₂alkylene is preferably a group

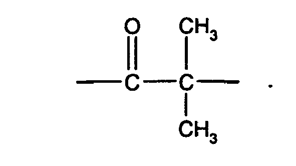

### (c') A compound of the formula (1c)

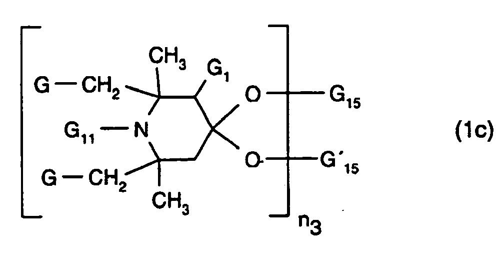

in which n₃ is the number 1 or 2, G, G₁ and G₁₁ are as defined under (a'), and G₁₅ and G'₁₅ if n₃ is 1, are independently C₁-C₁₂ alkyl, C₂-C₁₂ alkenyl, C₇-C₁₂ aralkyl, or G₁₅ is also hydrogen, or G₁₅ and G'₁₅ together are C₂-C₈alkylene, C₅-C₁₅alkenylene, C₂-C₈hydroxyalkylene or C₄-C₂₂acyloxyalkylene, and if n₃ is 2, G₁₅ and G'₁₅ together are the (-CH₂)₂C(CH₂-)₂ group.
C₂-C₈alkylene or C₂-C₈hydroxyalkylene G₁₅ and G'₁₅ is, for example, ethylene, 1-methylethylene, propylene, 2-ethylpropylene or 2-ethyl-2-hydroxymethylpropylene.
C₄-C₂₂acyloxyalkylene G₁₅ and G'₁₅ is, for example, 2-ethyl-2-acetoxymethylpropylene.

### (d') A compound of the formula (1d-1), (1 d-2) or (1 d-3),

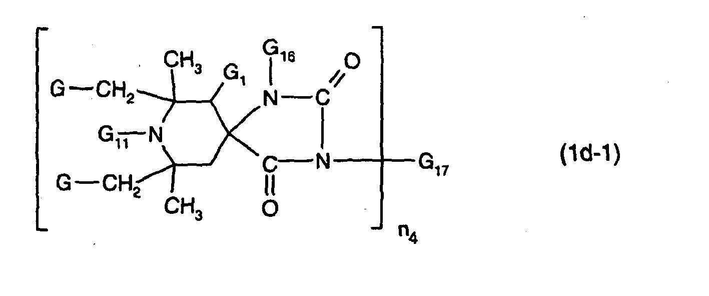

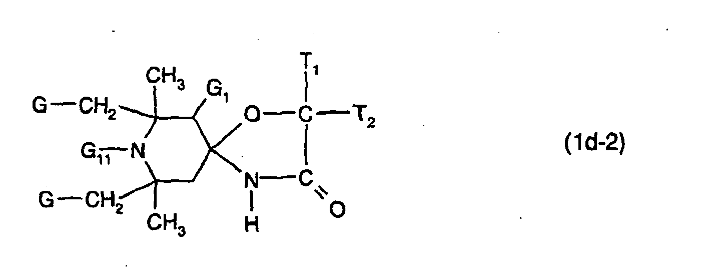

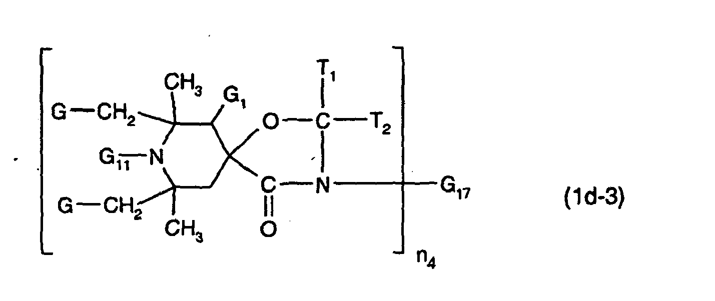

in which n₄ is the number 1 or 2, G, G₁ and G₁₁ are as defined under (a'),
G₁₆ is hydrogen, C₁-C₁₂alkyl, allyl, benzyl, glycidyl or C₂-C₆alkoxyalkyl, and
G₁₇, if n₄ is 1, is hydrogen, C₁-C₁₂alkyl, C₃-C₅alkenyl, C₇-Cgaralkyl, C₅-C₇cycloalkyl, C₂-C₄hydroxyalkyl, C₂-C₆alkoxyalkyl, C₆-C₁₀aryl, glycidyl or a group of the formula -(CH₂)ₚ-COO-Q or -(CH₂)ₚ-O-CO-Q, in which p is 1 or 2, and Q is C₁-C₄alkyl or phenyl, and
G₁₇, if n₄ is 2, is C₂-C₁₂alkylene, C₄-C₁₂alkenylene, C₆-C₁₂arylene, a group of the formula -CH₂-CH(OH)-CH₂-O-D'-O-CH₂-CH(OH)-CH₂-, in which D' is C₂-C₁₀alkylene, C₆-C₁₅arylene or C₆-C₁₂cycloalkylene, or a group of the formula -CH₂CH(OD")CH₂-(OCH₂-CH(OD")CH₂)₂-, in which D" is hydrogen, C₁-C₁₈alkyl, allyl, benzyl, C₂-C₁₂alkanoyl or benzoyl,
T₁ and T₂, independently of one another, are hydrogen, C₁-C₁₈alkyl or unsubstituted or halogen- or C₁-C₄alkyl-substituted C₆-C₁₀aryl or C₇-C₉aralkyl, or
T₁ and T₂ together with the carbon atom bonding them form a C₅-C₁₄cycloalkane ring.

Any C₁-C₁₂alkyl substituents are, for example, methyl, ethyl, n-propyl, n-butyl, sec-butyl, tert-butyl, n-hexyl, n-octyl, 2-ethylhexyl, n-nonyl, n-decyl, n-undecyl or n-dodecyl.

Any C₁-C₁₈alkyl substituents can be, for example, the abovementioned groups and in addition, for example, n-tridecyl, n-tetradecyl, n-hexadecyl or n-octadecyl.

Any C₂-C₆alkoxyalkyl substituents are, for example, methoxymethyl, ethoxymethyl, propoxymethyl, tert-butoxymethyl, ethoxyethyl, ethoxypropyl, n-butoxyethyl, tert-butoxyethyl, isopropoxyethyl or propoxypropyl.

C₃-C₅alkenyl G₁₇ is, for example, 1-propenyl, allyl, methallyl, 2-butenyl or 2-pentenyl.

C₇-C₉aralkyl G₁₇, T₁ and T₂ are, in particular, phenethyl or especially benzyl. If T₁ and T₂ together with the carbon atom form a cycloalkane ring, this can be, for example, a cyclopentane, cyclohexane, cyclooctane or cyclododecane ring.

C₂-C₄hydroxyalkyl G₁₇ is, for example, 2-hydroxyethyl, 2-hydroxypropyl, 2-hydroxybutyl or 4-hydroxybutyl.

C₆-C₁₀aryl G₁₇, T₁ and T₂ are, in particular, phenyl or α- or β-naphthyl, which are unsubstituted or substituted by halogen or C₁-C₄alkyl.

C₂-C₁₂alkylene G₁₇ is, for example, ethylene, propylene, 2,2-dimethylpropylene, tetramethylene, hexamethylene, octamethylene, decamethylene or dodecamethylene.

C₄-C₁₂alkenylene G₁₇ is, in particular, 2-butenylene, 2-pentenylene or 3-hexenylene.

C₆-C₁₂arylene G₁₇ is, for example, o-, m- or p-phenylene, 1,4-naphthylene or 4,4'-diphenylene.

C₂-C₁₂alkanoyl D" is, for example, propionyl, butyryl, octanoyl, dodecanoyl, but preferably acetyl.

C₂-C₁₀alkylene, C₆-C₁₅arylene or C₆-C₁₂cycloalkylene D' have, for example, one of the definitions given for D under (b').

### (e') A compound of the formula (1 e)

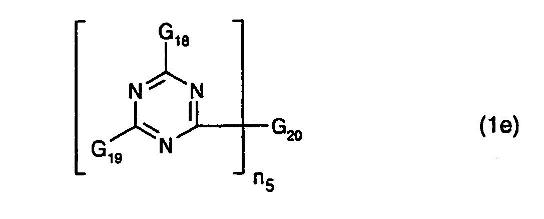

in which n₅ is the number 1 or 2, and G₁₈ is a group of the formula 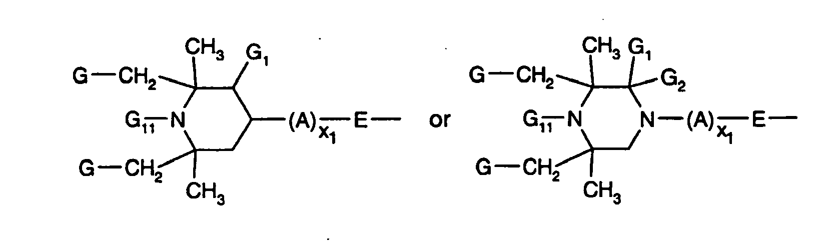
in which G and G₁₁ are as defined under (a'), and G₁ and G₂ are hydrogen, methyl or, together, are a substituent =O,
E is -O- or -ND"'-,
A is C₂-C₆alkylene or -(CH₂)₃-O- and
x₁ is the number 0 or 1,
D'" is hydrogen, C₁-C₁₂alkyl, C₂-C₁₂alkylene-N(D^{v})₂, C₂-C₅hydroxyalkyl or C₅-C₇cycloalkyl, where D^{v}, independently, is hydrogen or butyl,
G₁₉ is identical to G₁₈ or is one of the groups -N(G₂₁)(G₂₂), -OG₂₃, -N(H)(CH₂OG₂₃) or -N(CH₂OG₂₃)₂,
G₂₀, if n₅ =1, is identical to G₁₈ or G₁₉ and, if n₅ = 2, is an -E-D^{IV}-E- group, in which D^{IV} is C₂-C₈alkylene or C₂-C₈alkylene which is interrupted by 1 or 2 -NG₂₁- groups,
G₂₁ is hydrogen, C₁-C₁₂alkyl, cyclohexyl, benzyl or C₁-C₄-hydroxyalkyl or a group of the formula 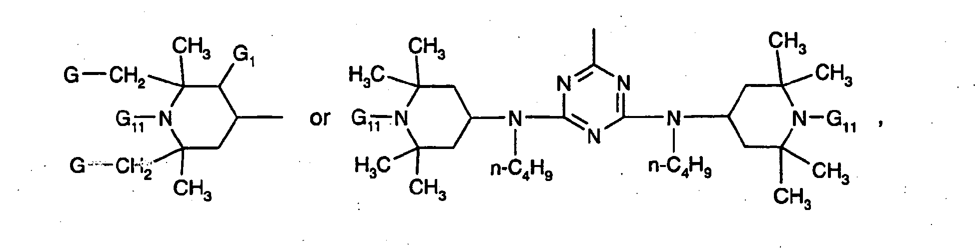
G₂₂ is C₁-C₁₂alkyl, cyclohexyl, benzyl or C₁-C₄hydroxyalkyl, and
G₂₃ is hydrogen, C₁-C₁₂alkyl or phenyl, or G₂₁ and G₂₂ together are C₄-C₅alkylene or C₄-C₅oxaalkylene, for example -CH₂CH₂-O-CH₂CH₂- , or a group of the formula -CH₂CH₂-N(G₁₁)-CH₂CH₂-.

Some examples of the several variables in the formula (Ie) are given below.

Any C₁-C₁₂alkyl substituents are, for example, methyl, ethyl, n-propyl, n-butyl, sec-butyl, tert-butyl, n-hexyl, n-octyl, 2-ethylhexyl, n-nonyl, n-decyl, n-undecyl or n-dodecyl.

Any hydroxyalkyl substituents are, for example, 2-hydroxyethyl, 2-hydroxypropyl, 3-hydroxypropyl, 2-hydroxybutyl or 4-hydroxybutyl.

Any C₅-C₇cycloalkyl substituents are, for example, cyclopentyl, cyclohexyl or cycloheptyl. Cyclohexyl is preferred.

C₂-C₆alkylene A is, for example, ethylene, propylene, 2,2-dimethylpropylene, tetramethylene or hexamethylene.

If G₂₁ and G₂₂ together are C₄-C₅alkylene or oxaalkylene, they are, for example, tetramethylene, pentamethylene or 3-oxapentamethylene.

### (f) A compound of the formula (1f)

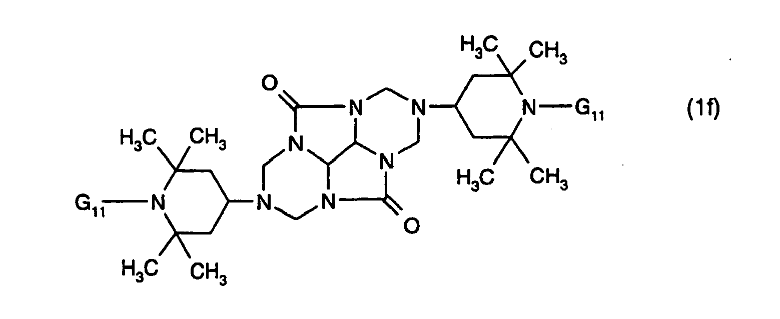

wherein G₁₁ is as defined under (a').

(g') Oligomeric or polymeric compounds whose recurring structural unit contains a 2,2,6,6-tetraalkylpiperidinyl radical, in particular polyesters, polyethers, polyamides, polyamines, polyurethanes, polyureas, polyaminotriazines, poly(meth)acrylates, poly(meth)acrylamides and copolymers thereof which contain such radicals.

Examples of 2,2,6,6-polyalkylpiperidine compounds from this class are the compounds of the following formulae. m₁ to m₁₄ is a number from 2 to about 200, preferably 2 to 100, for example 2 to 50, 2 to 40, 3 to 40 or 4 to 10.

The meanings of the end groups which saturate the free valences in the oligomeric or polymeric compounds listed below depend on the processes used for the preparation of said compounds. The end groups can also in addition be modified after the synthesis of the compounds.

Examples for polymeric compounds are:
1) A compound of the formula (1g) 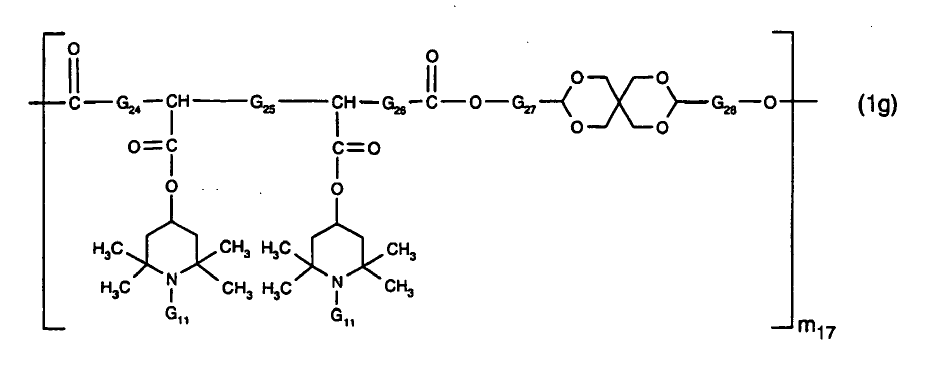 wherein G₂₄, G₂₅, G₂₆, G₂₇ and G₂₈, independently of one another, are a direct bond or C₁-C₁₀alkylene, G₁₁ is as defined under (a') and m₁₇ is a number from 1 to 50.
   In the compound of the formula (1g), the end group bonded to the >C=O group can be, for example, 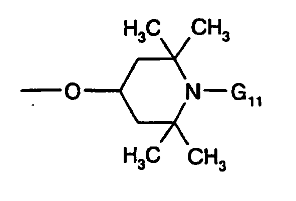 and the end group bonded to the oxygen can be, for example 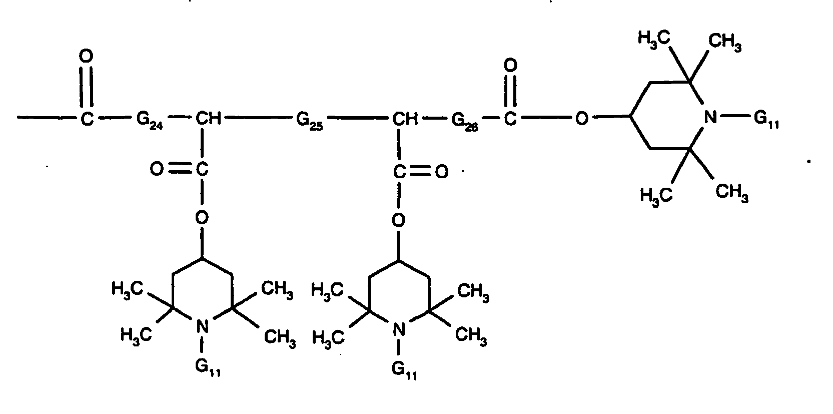
2) Compound of the formula (2g) 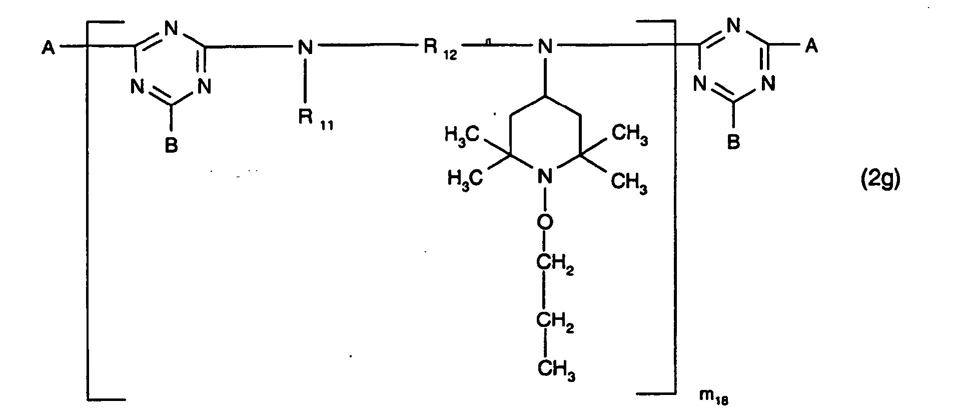
   in which the index m₁₈ ranges from 1 to 15;
   R₁₂ is C₂-C₁₂alkylene, C₄-C₁₂alkenylene, C₅-C₇cycloalkylene, C₅-C₇cycloalkylene-di(C₁-C₄alkylene), C₁-C₄alkylenedi(C₅-C₇cycloalkylene), phenylenedi(C₁-C₄alkylene) or C₄-C₁₂alkylene interrupted by 1,4-piperazinediyl, -O- or >N-X₁ with X₁ being C₁-C₁₂acyl or (C₁-C₁₂alkoxy)carbonyl or having one of the definitions of R₁₄ given below except hydrogen; or R₁₂ is a group of the formula (2g') or (2g"); 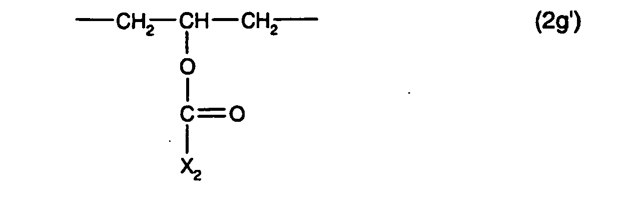 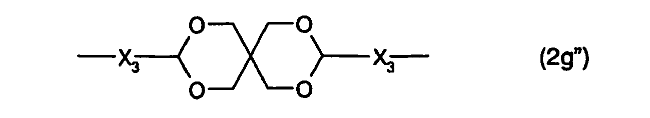
   X₂ being C₁-C₁₈alkyl, C₅-C₁₂cycloalkyl which is unsubstituted or substituted by 1, 2 or 3 C₁-C₄alkyl; phenyl which is unsubstituted or substituted by 1, 2 or 3 C₁-C₄alkyl or C₁-C₄alkoxy; C₇-C₉phenylalkyl which is unsubstituted or substituted on the phenyl by 1, 2 or 3 C₁-C₄alkyl; and
   the radicals X₃ being independently of one another C₂-C₁₂alkylene;
   the radicals A are independently of one another -OR₁₃, -N(R₁₄)(R₁₅) or a group of the formula (2g"'); 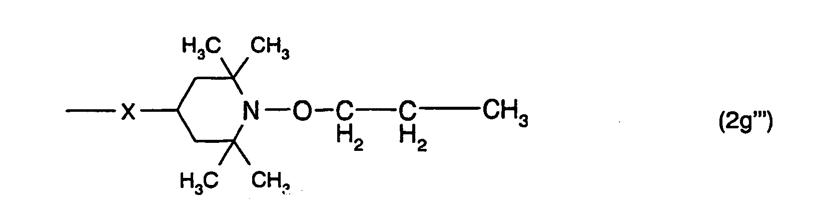
   R₁₃, R₁₄ and R₁₅, which are identical or different, are hydrogen, C₁-C₁₈alkyl, C₅-C₁₂cycloalkyl which is unsubstituted or substituted by 1, 2 or 3 C₁-C₄alkyl; C₃-C₁₈alkenyl, phenyl which is unsubstituted or substituted by 1, 2 or 3 C₁-C₄alkyl or C₁-C₄alkoxy; C₇-C₉phenylalkyl which is unsubstituted or substituted on the phenyl by 1, 2 or 3 C₁-C₄alkyl; tetrahydrofurfuryl or C₂-C₄alkyl which is substituted in the 2, 3 or 4 position by -OH, C₁-C₈alkoxy, di(C₁-C₄alkyl)amino or a group of the formula (2g^{IV}); 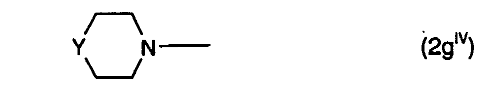
   with Y being -O-, -CH₂-, -CH₂CH₂- or >N-CH₃,
   or -N(R₁₄)(R₁₅) is additionally a group of the formula (2g^{IV});
   X is -O- or >N-R₁₆;
   R₁₆ is hydrogen, C₁-C₁₈alkyl, C₃-C₁₈alkenyl, C₅-C₁₂cycloalkyl which is unsubstituted or substituted by 1, 2 or 3 C₁-C₄alkyl; C₇-C₉phenylalkyl which is unsubstituted or substituted on the phenyl by 1, 2 or 3 C₁-C₄alkyl; tetrahydrofurfuryl, a group of the formula (2g^{V}), 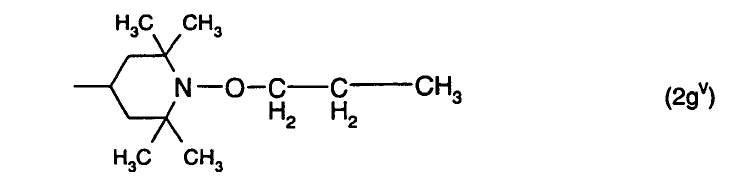
   or C₂-C₄alkyl which is substituted in the 2, 3 or 4 position by -OH, C₁-C₈alkoxy, di(C₁-C₄alkyl)amino or a group of the formula (2g^{IV});
   R¹¹ has one of the definitions given for R₁₆; and
   the radicals B have independently of one another one of the definitions given for A. Compounds (2g), such as compound (j) further below, are described in U.S. Pat. No. 6,117,995.
3) A compound of the formula (3g) 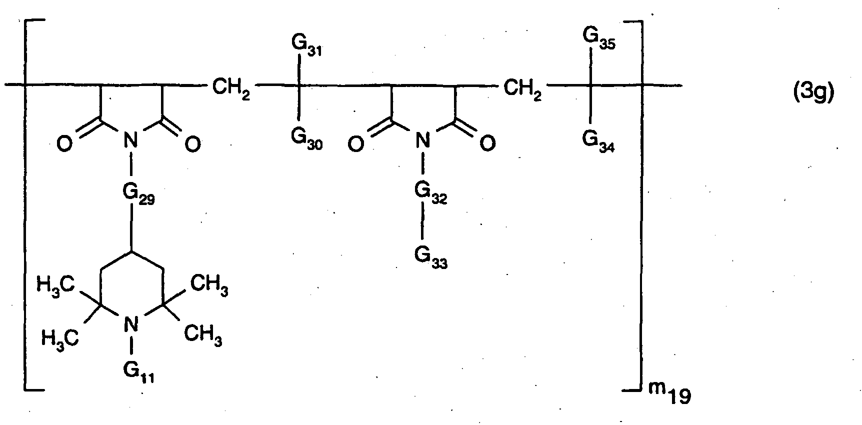 in which G₁₁ is as defined under (a'), G₂₉ and G₃₂, independently of one another, are a direct bond or a -N(X₁)-CO-X₂-CO-N(X₃)- group, where X₁ and X₃, independently of one another, are hydrogen, C₁-C₈alkyl, C₅-C₁₂cycloalkyl, phenyl, C₇-C₉phenylalkyl or a group of the formula 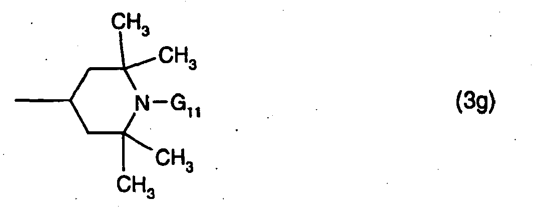 and X₂ is a direct bond or C₁-C₄alkylene, G₃₀, G₃₁, G₃₄ and G₃₅, independently of one another, are hydrogen, C₁-C₃₀alkyl, C₅-C₁₂cycloalkyl or phenyl, G₃₃ is hydrogen, C₁-C₃₀alkyl, C₅-C₁₂cycloalkyl, C₇-C₉phenylalkyl, phenyl or a group of the formula (3g), and m₁₉ is a number from 1 to 50.
   In the compounds of the formula (3g), the end group bonded to the 2,5-dioxopyrrolidine ring can be, for example, hydrogen, and the end group bonded to the -C(G₃₄)(G₃₅)- radical can be, for example, 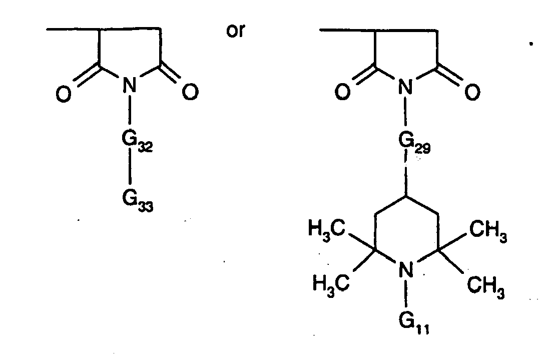
4) A product obtainable by reacting an intermediate product, obtained by reaction of a polyamine of the formula (4g) with cyanuric chloride, with a compound of the formula (4g') 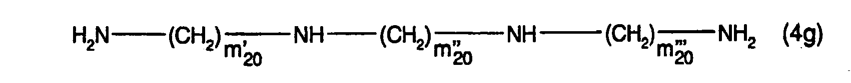 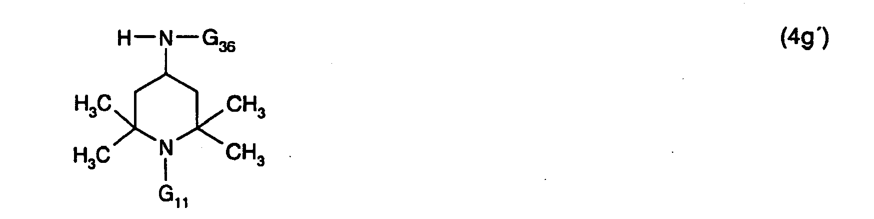
   in which m'₂₀, m"₂₀ and m'"20, independently of one another, are a number from 2 to 12,
   G₃₆ is hydrogen, C₁-C₁₂alkyl, C₅-C₁₂cycloalkyl, phenyl or C₇-C₉phenylalkyl, and
   G₁₁ is as defined under (a').

   In general, the above reaction product can be represented for example by a compound of the following 3 formulae. It can also be in the form of a mixture of these three compounds: 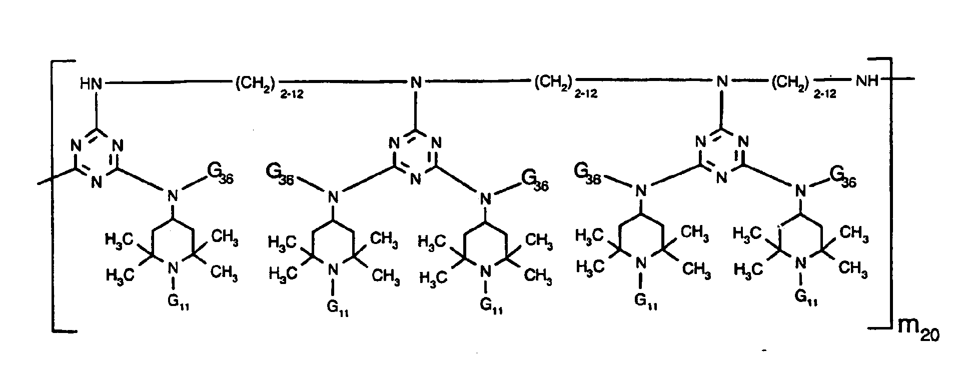 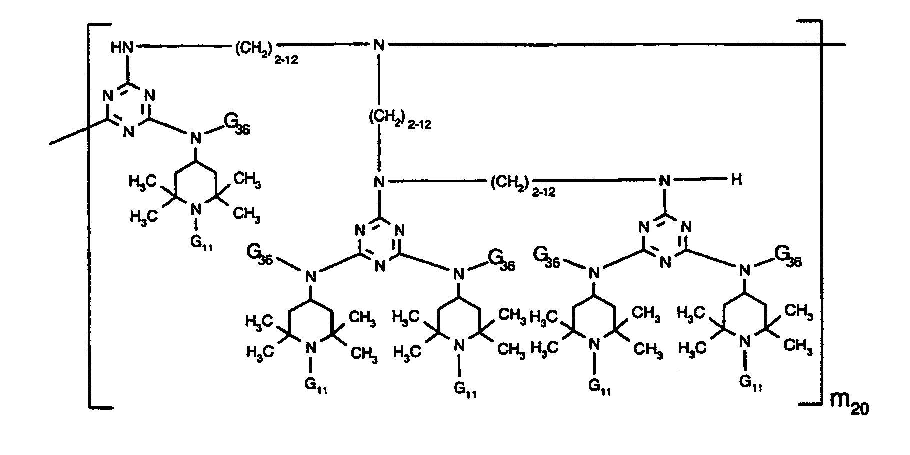 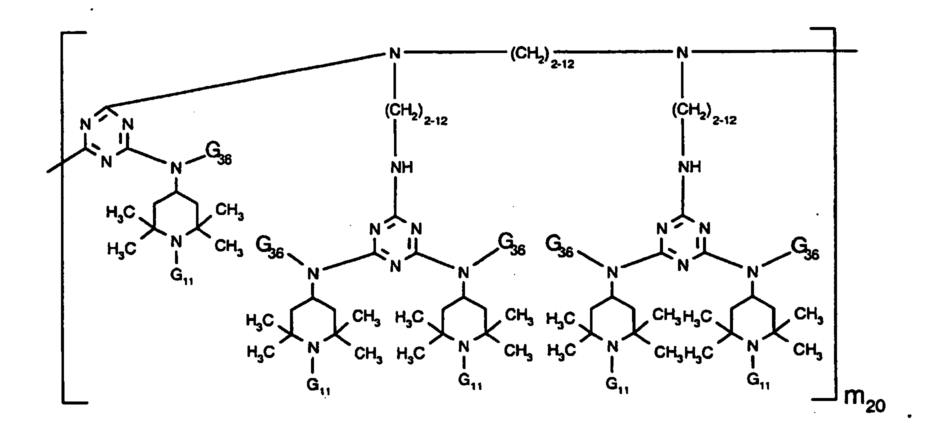
5) A compound of the formula (5g) 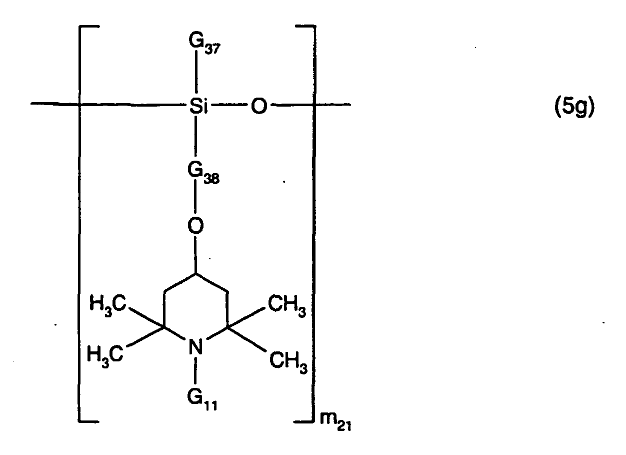 in which G₁₁ is as defined under (a'), G₃₇ is C₁-C₁₀alkyl, C₅-C₁₂cycloalkyl, C₁-C₄alkylsubstituted C₅-C₁₂cycloalkyl, phenyl or C₁-C₁₀alkyl-substituted phenyl, G₃₈ is C₃-C₁₀alkylene and m₂₁ is a number from 1 to 50.
   In the compounds of the formula (5g), the terminal group bonded to the silicon atom can be, for example, (G₃₇)₃Si-O-, and the terminal group bonded to the oxygen can be, for example, - Si(G₃₇)₃.
   The compounds of the formula (5g) can also be in the form of cyclic compounds if m₂₁ is a number from 3 to 10, i.e. the free valences shown in the structural formula then form a direct bond.
6) A compound of the formula (6g) 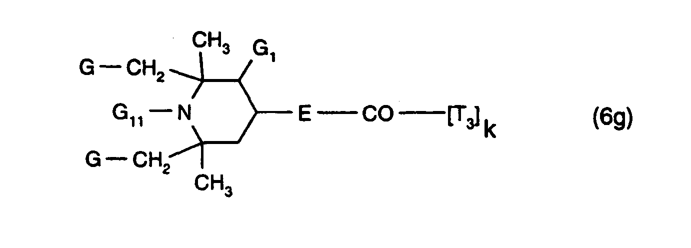 where E is -O- or -ND"'- as defined under (e'), T₃ is ethylene or 1,2-propylene, is the repeating structural unit derived from an alpha-olefin copolymer with an alkyl acrylate or methacrylate; preferably a copolymer of ethylene and ethyl acrylate, and where k is 2 to 100.
7) A compound of the formula (7g) 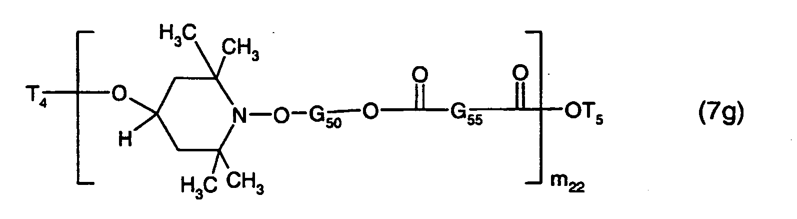
   wherein m is 1 to 100;
   G₅₀ is straight or branched chain alkylene of 1 to 18 carbon atoms, cycloalkylene of 5 to 8 carbon atoms, cycloalkenylene of 5 to 8 carbon atoms, alkenylene of 3 to 18 carbon atoms, a straight or branched chain alkylene of 1 to 4 carbon atoms substituted by phenyl or by phenyl substituted by one or two alkyl of 1 to 4 carbon atoms, with the proviso that in formula (7g) successive hindered amine moieties can be oriented in either a head to head or head to tail fashion;
   T₄ is hydrogen or
   T₄ is 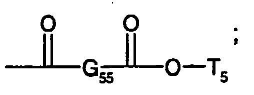
   G₅₅ is a straight or branched chain alkylene of 1 to 18 carbon atoms, cycloalkylene or cycloalkenylene of 5 to 8 carbon atoms, phenylene or -NH-alkylene-NH- of 2 to 18 carbon atoms including 5-amino-1-aminomethyl-1,3,3-trimethylcyclohexane and -NH-xylylene-NH-;
   T₅ is alkyl of 1 to 4 carbon atoms; 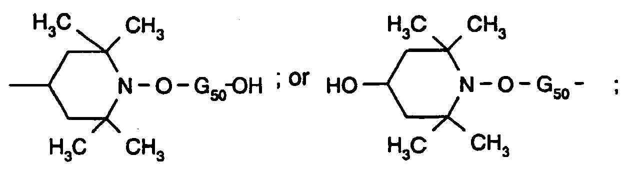
   In the above shown oligomeric and polymeric compounds,
   examples of alkyl are methyl, ethyl, propyl, isopropyl, n-butyl, sec-butyl, isobutyl, tert-butyl, 2-ethylbutyl, n-pentyl, isopentyl, 1-methylpentyl, 1,3-dimethylbutyl, n-hexyl, 1-methylhexyl, n-heptyl, isoheptyl, 1,1,3,3-tetramethylbutyl, 1-methylheptyl, 3-methylheptyl, n-octyl, 2-ethyl-hexyl, 1,1,3-trimethylhexyl, 1,1,3,3-tetramethylpentyl, nonyl, decyl, undecyl, 1-methylundecyl, dodecyl, 1,1,3,3,5,5-hexamethylhexyl, tridecyl, tetradecyl, pentadecyl, hexadecyl, heptadecyl, octadecyl, eicosyl and docosyl;
   examples of cycloalkyl are cyclopentyl, cyclohexyl, cycloheptyl and cyclooctyl;
   an example of C₇-C₉phenylalkyl is benzyl; and
   examples of alkylene are ethylene, propylene, trimethylene, tetramethylene, pentamethylene, 2,2-dimethyltrimethylene, hexamethylene, trimethylhexamethylene, octamethylene and decamethylene.

### (h') A compound of the formula (1h)

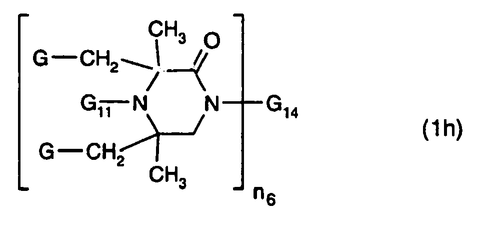

in which n₆ is the number 1 or 2, G and G₁₁ are as defined under (a'), and G₁₄ is as defined under (b'), but G₁₄ cannot be -CONH-Z and -CH₂-CH(OH)-CH₂-O-D-O-.

### (i') A compound of the formula (1i)

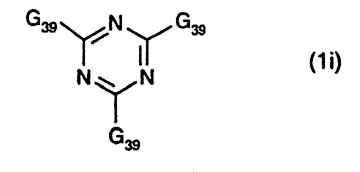

wherein the radicals G₃₉, independently of one another, are a group of the formula (1i-1) 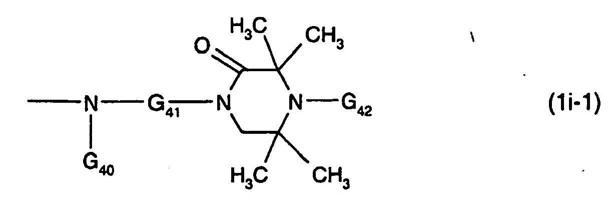 in which G₄₀ is C₁-C₁₂alky) or C₅-C₁₂cycloalkyl, G₄₁ is C₂-C₁₂alkylene and G₄₂ is as defined for G₁₁ above.

Alkyl is for example C₁-C₄alkyl, in particular methyl, ethyl, propyl or butyl.

Cycloalkyl is preferably cyclohexyl.

Alkylene is for example ethylene, propylene, trimethylene, tetramethylene, pentamethylene, 2,2-dimethyltrimethylene or hexamethylene.

Alkenyl is preferably allyl.

Phenylalkyl is preferably benzyl.

Acyl is preferably acetyl.

### (j') A compound of the formula (1 j)

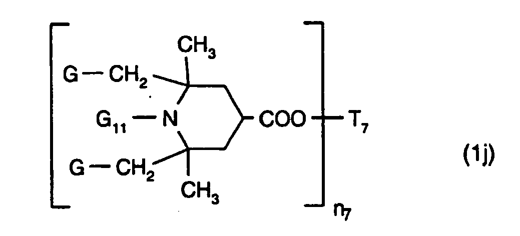

wherein G, G₁₁ are as defined above and
when n₇ is 1, T₇ is hydrogen, C₁-C₁₂alkyl, C₃-C₅alkenyl, C₇-C₉aralkyl, C₅-C₇cycloalkyl, C₂-C₄hydroxyalkyl, C₂-C₆alkoxyalkyl, C₆-C₁₀ aryl, glycidyl, a group of the formula -(CH₂)ₜ-COO-Q or of the formula -(CH₂)ₜ-O-CO-Q wherein t is 1 or 2, and Q is C₁-C₄alkyl or phenyl; or
when n₇ is 2, T₇ is C₂-C₁₂alkylene, C₆-C₁₂arylene, a group -CH₂CH(OH)-CH₂-O-X-O-CH₂-CH(OH)-CH₂- wherein X is C₂-C₁₀alkylene, C₆-C₁₅arylene or C₆-C₁₂cycloalkylene, or a group - CH₂CH(OZ')CH₂-(OCH₂-CH(OZ')CH₂)₂- wherein Z' is hydrogen, C₁-C₁₈alkyl, allyl, benzyl, C₂-C₁₂alkanoyl or benzoyl.

### (k') A compound of the formula (1 k)

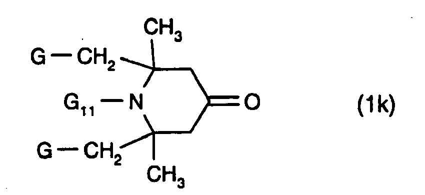

wherein G, G₁₁ are as defined above.

### (I') A compound of the formula (1I)

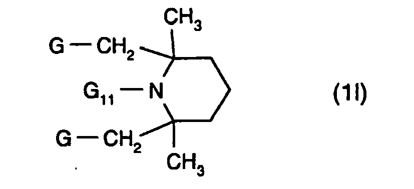

wherein G, G₁₁ are as defined above.

### (m') A compound of the formula (1m)

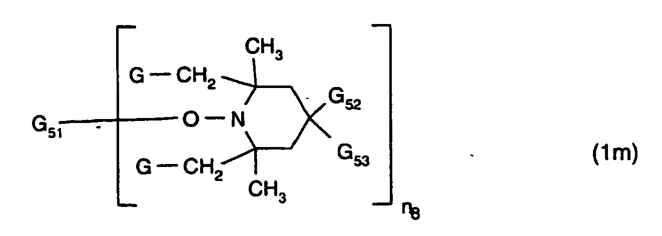

wherein G is as defined above, n₈ is 1, 2 or 3,
if n₈ is 1, G₅₁ is -G₅₀-O-CO-G₅₆; G₅₂ is -O-CO-G₅₆; and G₅₃ is hydrogen; where G₅₆ is alkyl or -NH-alkyl of 1 to 18 carbon atoms or -NH-cycloalkyl of 5 to 8 carbon atoms;
if n₈ is 2, G₅₁ is alkylene of 1 to 18 carbon atoms, hydroxyalkylene of 3 to 18 carbon atoms, cycloalkylene of 5 to 8 carbon atoms, cycloalkenylene or hydroxycycloalkylene of 5 to 8 carbon atoms, alkenylene of 3 to 18 carbon atoms, or a straight or branched chain alkylene of 1 to 4 carbon atoms or hydroxyalkylene of 2 to 4 carbon atoms substituted by phenyl or by phenyl substituted by one or two alkyl of 1 to 4 carbon atoms; or G₅₁ is a divalent acyl radical of an aliphatic, cycloaliphatic, araliphatic or aromatic dicarboxylic acid or of a dicarbamic acid, preferably an acyl radical of an aliphatic dicarboxylic acid having 2-18 C atoms, of a cycloaliphatic or aromatic dicarboxylic acid having 8-14 C atoms,
if n₈ is 3, G₅₁ is alkanetriyl of 1 to 18 carbon atoms, hydroxyalkanetriyl of 3 to 18 carbon atoms, cycloalkanetriyl of 5 to 8 carbon atoms, cycloalkenetriyl of 5 to 8 carbon atoms, alkenetriyl of 3 to 18 carbon atoms, a straight or branched chain alkanetriyl of 1 to 4 carbon atoms substituted by phenyl or by phenyl substituted by one or two alkyl of 1 to 4 carbon atoms;
if n₈ is 2 or 3,
G₅₂ is hydrogen; -O-G₁₂; -N(G₁₃)G₁₄; -Q-G₁₅; -COO-T₇; or is a group of one of the formulae 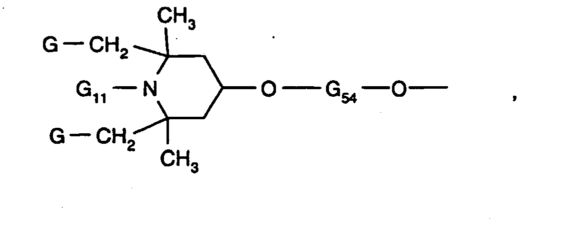 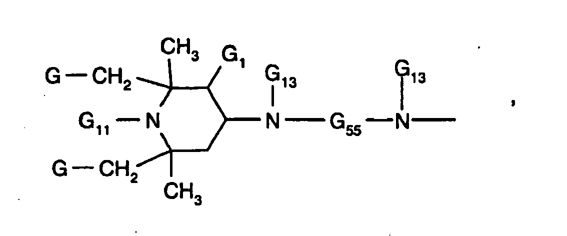 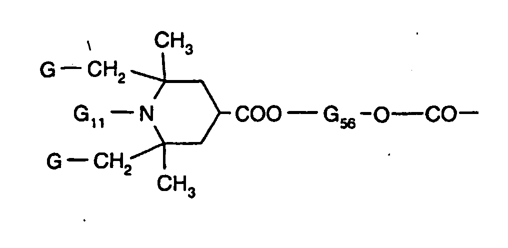 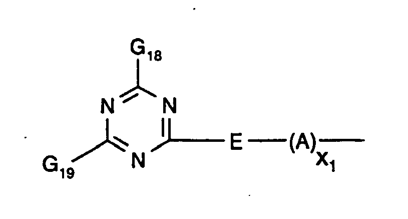 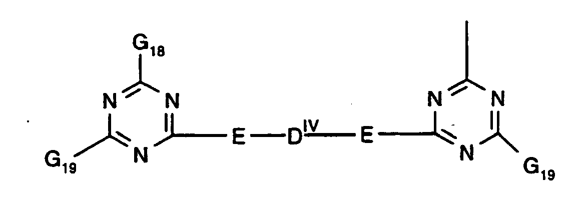 and
G₅₃ is hydrogen or, if G₅₂ is -O-G₁₅, is O-G'₁₅;
or G₅₂ and G₅₃ together are =O; or a group of the formula 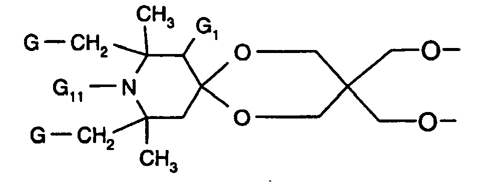
where G₁₁ and G₁₂ are as defined above under (a') if n₁ is 1; G₁₃ and G₁₄ are as defined above under (b') if n₂ is 1; G₁₅ and G'₁₅ are as defined above under (c') if n₃ is 1; G₁₈, G₁₉, A, E, D^{IV}, x₁ are as defined above under (e'); T₇ is as defined above under (j') if n₇ is 1;
G₅₄ is as defined for G₁₂ under (a') if n₁ is 2; G₅₅ is as defined for G₁₄ under (b') if n₂ is 2; G₅₆ is as defined for T₇ under (j') if n₇ is 2.

Acyl is a residue of a carboxylic acid preferably containing containing 2 to 18 carbon atoms; examples for monovalent acyl radicals include acyl radicals of an aliphatic or unsaturated aliphatic carboxylic or carbamic acid, an acyl radical of a cycloaliphatic carboxylic or carbamic acid, or acyl radical of an aromatic acid, like acetyl, propionyl, butyryl, (meth)acryloyl and the like up to stearoyl, benzoyl, cinnamoyl; a divalent acyl radical of an aliphatic or unsaturated aliphatic dicarboxylic or dicarbamic acid, or a cycloaliphatic dicarboxylic or dicarbamic acid, or a divalent acyl radical of an aromatic dicarboxylic acid like oxalic acid, maleic acid, succinic acid, phthalic acid etc.; a trivalent acyl radical of an aliphatic, unsaturated aliphatic, or cycloaliphatic tricarboxylic acid or tricarbamic acid, or a trivalent acyl radical of an aromatic tricarboxylic or tricarbamic acid, or a trivalent acyl radical of a tris(alkylcarbamic acid) derivative of cyanuric acid containing 12-24 carbon atoms, such as 1,3,5-tris[6-carboxyaminohexyl]-2,4,6-trioxo-s-triazine; or a tetravalent acyl radical of an aliphatic, cycloaliphatic or aromatic tetracarboxylic acid, like 1,2,3,4-butanetetracarboxylic acid, 1,2,3,4-but-2-enetetracarboxylic acid, 1,2,3,5-pentanetetracarboxylic acid and 1,2,4,5-pentanetetracarboxylic acid.

Alkyl is usually alkyl of 1-18 carbon atoms, unless otherwwise indicated. Cycloalkyl usually contains 5-12 carbon atoms and preferably stands for cyclopentyl, cyclohexyl, cycloheptyl, cyclooctyl, cyclododecyl. Aryl is preferably phenyl.

Nitroxyl hindered amines of component (i) where L is -O' are for example those disclosed in WO99/05108.

Typical nitroxyls of component (i) where L is -O include bis(1-oxyl-2,2,6,6-tetramethylpiperidin-4-yl) sebacate, 4-hydroxy-1-oxyl-2,2,6,6-tetramethylpiperidine, 4-ethoxy-1-oxyl-2,2,6,6-tetramethylpiperidine, 4-propoxy-1-oxyl-2,2,6,6-tetramethylpiperidine, 4-acetamido-1-oxyl-2,2,6,6-tetramethylpiperidine, 1-oxyl-2,2,6,6-tetramethylpiperidine, 1-oxyl-2,2,6,6-tetramethylpiperidin-4-one, 1-oxyl-2,2,6,6-tetramethylpiperidin-4-yl acetate, 1-oxyl-2,2,6,6-tetramethylpiperidin-4-yl 2-ethylhexanoate, 1-oxyl-2,2,6,6-tetramethylpiperidin-4-yl stearate, 1-oxyl-2,2,6,6-tetramethylpiperidin-4-yl benzoate, 1-oxyl-2,2,6,6-tetramethylpiperidin-4-yl 4-t-butyl-benzoate, bis(1-oxyl-2,2,6,6-tetramethylpiperidin-4-yl) succinate, bis(1-oxyl-2,2,6,6-tetramethylpiperidin-4-yl) adipate, bis(1-oxyl-2,2,6,6-tetramethylpiperidin-4-yl) n-butylmalonate, bis(1-oxyl-2,2,6,6-tetramethylpiperidin-4-yl) phthalate, bis(1-oxyl-2,2,6,6-tetramethylpiperidin-4-yl) isophthalate, bis(1-oxyl-2,2,6,6-tetramethylpiperidin-4-yl) terephthalate, bis(1-oxyl-2,2,6,6-tetramethylpiperidin-4-yl) hexahydroterephthalate, N,N'-bis(1-oxyl-2,2,6,6-tetramethylpiperidin-4-yl)adipamide, N-(1-oxyl-2,2,6,6-tetramethylpiperidin-4-yl)caprolactam, N-(1-oxyl-2,2,6,6-tetramethylpiperidin-4-yl)dodecylsuccinimide, 2,4,6-tris-[N-butyl-N-(1-oxyl-2,2,6,6-tetramethylpiperidin-4-yl)]-s-triazine, 4,4'-ethylenebis(1-oxyl-2,2,6,6-tetramethylpiperazin-3-one), 2-oxyl-1,1,3,3-tetramethyl-2-isobenzazole, 1-oxyl-2,2,5,5-tetramethylpyrrolidine, and N,N-bis-(1,1,3,3-tetramethylbutyl)nitroxide.

Nitroxyl stabilizers of component (i) are for example bis(1-oxyl-2,2,6,6-tetramethylpiperidin-4-yl) sebacate, 4-hydroxy-1-oxyl-2,2,6,6-tetramethylpiperidine, 4-ethoxy-1-oxyl-2,2,6,6-tetramethylpiperidine, 4-propoxy-1-oxyl-2,2,6,6-tetramethylpiperidine, 4-acetamido-1-oxyl-2,2,6,6-tetramethylpiperidine, 1-oxyl-2,2,6,6-tetramethylpiperidine, and 1-oxyl-2,2,6,6-tetramethylpiperidin-4-one.

A specific embodiment is where the nitroxyl stabilizers of component (i) are bis(1-oxyl-2,2,6,6-tetramethylpiperidin-4-yl) sebacate and 4-hydroxy-1-oxyl-2,2,6,6-tetramethylpiperidine.

Hydroxylamine stabilizers of component (i) where L is -OH are for example those disclosed in U.S. Patent Nos. 4,590,231, 4,668,721, 4,691,015, 4,831,134, 5,006,577, and 5,064,883, the relevant parts of which are incorporated herein by reference.

Alkoxyamine or hydroxyalkoxyamine stabilizers of component (i) where L is -O-E₁ are for example those disclosed in U.S. Patent Nos. 5,004,770; 5,096,950; 5,112,890; 5,124,378; 5,145,893; 5,204,473; 5,216,156; 5,300,544; 5,844,026; 6,117,995, the relevant parts of which are incorporated herein by reference; or the publications WO 99/00450 and GB-A-2,347,928 as well as US patent applications Nos. 09/257,711 (now U.S. Pat. No. 6,271,377) and 09/794,710.

Component (i) may be a single compound or a mixture of compounds.

Typical alkoxyamine or hydroxyalkoxyamine stabilizers of component (i) where L is -O-E₁ include
(a) the reaction product of 2,4-bis[(1-cyclohexyloxy-2,2,6,6-piperidin-4-yl)butylamino]-6-chloro-s-triazine with N,N'-bis(3-aminopropyl)ethylenediamine) [CAS Reg. No. 191680-81-6];
(b) 1-cyclohexyloxy-2,2,6,6-tetramethyl-4-octadecylaminopiperidine;
(c) bis(1-octyloxy-2,2,6,6-tetramethylpiperidin-4-yl) sebacate;
(d) 2,4-bis[(1-cyclohexyloxy-2,2,6,6-tetramethylpiperidin-4-yl)butylamino]-6-(2-hydroxyethylamino-s-triazine;
(e) bis(1-cyclohexyloxy-2,2,6,6-tetramethylpiperidin-4-yl) adipate;
(h) 2,4-bis[(1-cyclohexyloxy-2,2,6,6-piperidin-4-yl)butylamino]-6-chloro-s-triazine;
(i) 1-(2-hydroxy-2-methylpropoxy)-4-octadecanoyloxy-2,2,6,6-tetramethylpiperidine; or
(j) the compound of formula 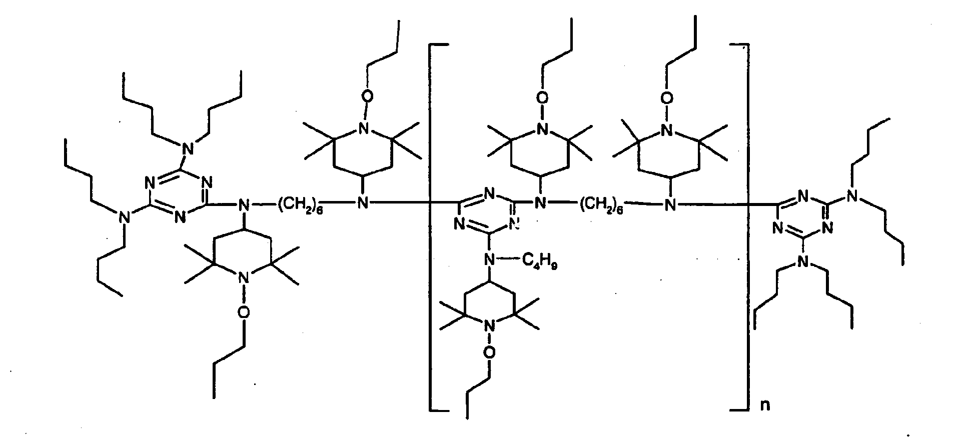
in which n is from 1 to 15.

Compound (i), prepared e.g. according to example 73 of GB-A-2347928, may contain by-products, usually in minor amounts such as 0-5 %, especially 0.01 -1 % by weight, such as compounds of the following formulae:

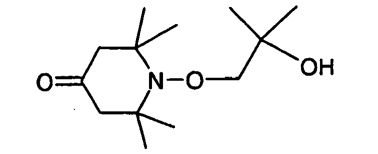

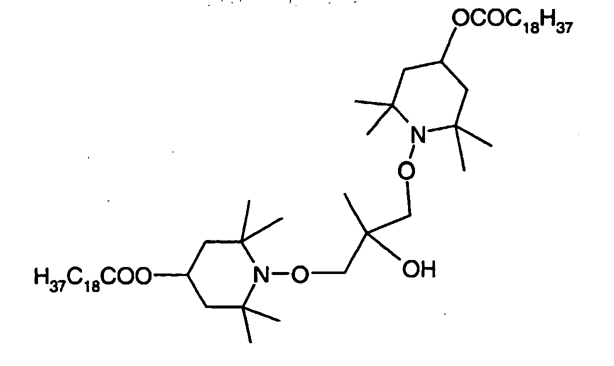

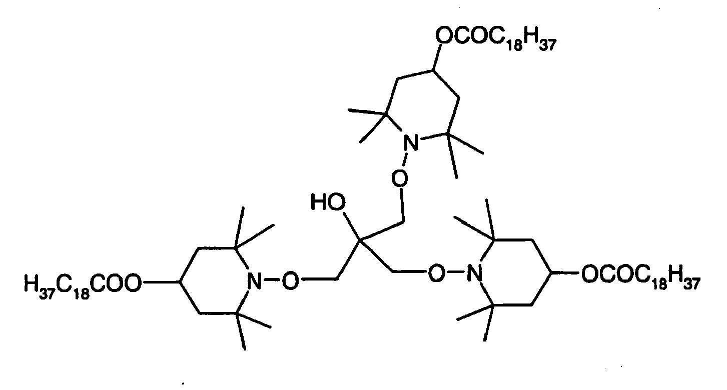

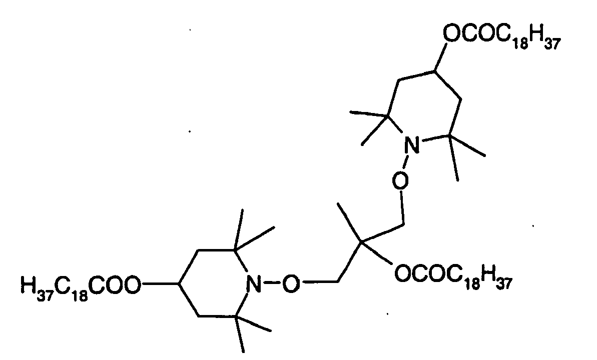

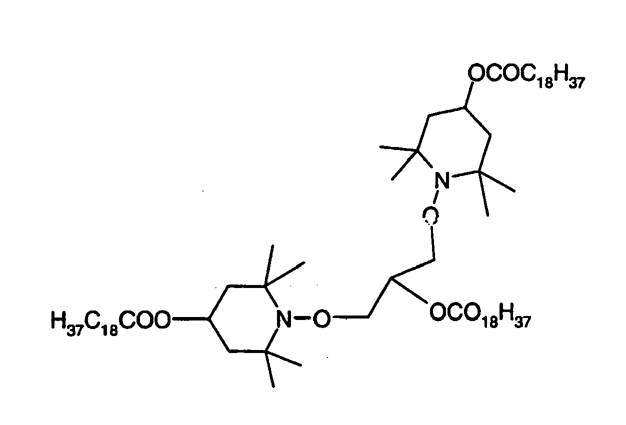

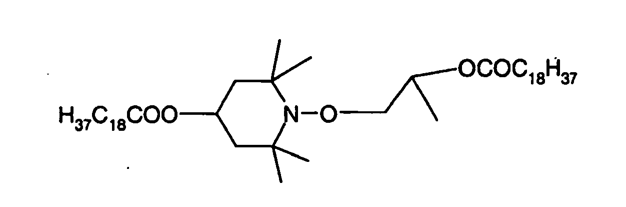

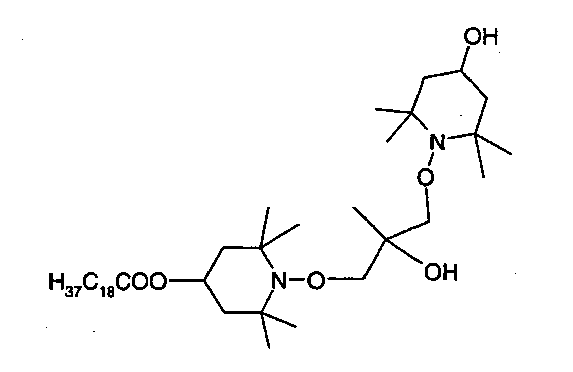

Compound (i) may also be a mixture of compounds with regard to the octadecanoyl moiety, e.g. when prepared from commercial methyl stearate containing, in addition to the stearate group, the hexadecanoic, eicosanoic and oleic acid ester groups, among other chain lengths.

Compound (j) is disclosed in example 2 of U.S. Patent No. 6,117,995.

Preferably the sterically hindered alkoxyamine or hydroxyalkoxyamine is the reaction product of 2,4-bis[(1-cyclohexyloxy-2,2,6,6-piperidin-4-yl)butylamino]-6-chloro-s-triazine with N,N'-bis(3-aminopropyl)ethylenediamine) [CAS Reg. No. 191680-81-6]; bis(1-octyloxy-2,2,6,6-tetramethylpiperidin-4-yl) sebacate; or the above compounds (i) and/or (j).

Component (i) is advantageously contained in the composition of the invention in an amount from 0.1 to 10% by weight based on the polymeric substrate (A); more preferably 0.25 to 8% by weight; and most preferably 0.5 to 3% by weight.

### Component (ii)

The fluorinated polyolefin (component ii) usually is selected from the perfluoroalkane resins or perfluoroalkylene copolymers prepared using minor amounts of fluorine-free ethylenically unsaturated monomers as described in US-4,579,906, col. 3, lines 1-21, and references cited therein, or US-6,162,851, col. 4, line 51, until col. 5, line 36; or US-6,117,542, col. 17, lines 16-23. The fluorine contents usually range from 65 to 76 % by weight. Examples are polytetrafluoroethylene (PTFE), tetrafluoroethylene-hexafluoropropylene resin (FEP) or corresponding copolymers. Preferred is polytetrafluoroethylene (PTFE), available inter alia under the name FLUON^{®} (e.g. FLUON^{®} CD1, ICI), POLYFLON^{®} (e.g. POLYFLON^{®} TFE or F-201 L, Daikin Industries), TEFLON^{®} (e.g. TEFLON^{®} 62 or TEFLON^{®} 6C, Du Pont), TF 2071 (3M).

Preferably, a fine grade of fluorinated polyolefin is used, having particle sizes e.g. below 1000 microns. More preferably, PTFE particle sizes between 70 and 700 microns are employed in compositions of the invention.

Component (ii) is advantageously contained in the composition of the invention in an amount from 0.01 to 5% by weight based on the polymeric substrate (A); more preferably 0.05 to 2% by weight; most preferably 0.1 to 1.5% by weight.

### Component (iii)

The halogenated flame retardants useful as component (iii) in compositions of present invention may be selected from organic aromatic halogenated compounds such as halogenated benzenes, biphenyls, phenols, ethers or esters thereof, bisphenols, diphenyloxides, aromatic carboxylic acids or polyacids, anhydrides, amides or imides thereof; organic cycloaliphatic or polycycloaliphatic halogenated compounds; and organic aliphatic halogenated compounds such as halogenated paraffins, oligo- or polymers, alkylphosphates or alkylisocyanurates. These components are largely known in the art, see e.g. US patents Nos. 4,579,906 (e.g. col. 3, lines 30-41), 5,393,812; see also Plastics Additives Handbook, Ed. by H. Zweifel, 5th Ed., Hanser Publ., Munich 2001, pp. 681-698.

The halogenated flame retardant is preferably a chlorinated or brominated compound, e.g. selected from the following compounds:
Chloroalkyl phosphate esters (ANTIBLAZE^{®} AB-100, Albright & Wilson; FYROL^{®} FR-2, Akzo Nobel),
polybrominated diphenyl oxide (DE-60F, Great Lakes Corp.),
decabromodiphenyl oxide (DBDPO; SAYTEX^{®} 102E),
tris[3-bromo-2,2-bis(bromomethyl)propyl] phosphate (PB 370^{®}, FMC Corp.),
bis(2,3-dibromopropyl ether) of bisphenol A (PE68),
brominated epoxy resin,
ethylene-bis(tetrabromophthalimide) (SAYTEX^{®} BT-93),
bis(hexachlorocyclopentadieno)cyclooctane (DECLORANE PLUS^{®}),
chlorinated paraffins,
1,2-bis(tribromophenoxy)ethane (FF680),
tetrabromo-bisphenol A (SAYTEX^{®} RB100),
ethylene bis-(dibromo-norbornanedicarboximide) (SAYTEX^{®} BN-451), bis-(hexachlorocyclopentadieno) cyclooctane,
tris-(2,3-dibromopropyl)-isocyanurate,
ethylene-bis-tetrabromophthalimide.

Most preferred as component (iii) are brominated flame retardants.

Component (iii) is advantageously contained in the composition of the invention in an amount from 0.5 to 45 % by weight of the polymeric substrate (A); more preferably 3 to 40%, most preferably 5 to 35% by weight of component (A).

The preferred ratio (parts by weight) of components (i) : (ii) : (iii) is preferably within (1 - 20 parts of component (i)) : (1 part of component (ii)) : (10 - 200 parts of component (iii)).

The amount of component (iii) used also depends on the effectiveness of the specific compound(s), the polymer and the specific application type; for example, an amount of 5 to 15 % by weight of the compound tris[3-bromo-2,2-bis(bromomethyl)propyl] phosphate may be as efficient as an amount of 30 to 45 % by weight of the compound decabromodiphenyl oxide in respect of the flame retardancy of the final composition.

The resulting stabilized compositions of the invention may optionally also contain various conventional additives, preferably in amounts from about 0.01 to about 10%, more preferably from about 0.025 to about 4%, and especially from about 0.1 to about 2% by weight of component (a), such as the materials listed below, or mixtures thereof.
1. Antioxidants
1.1. Alkylated monophenols, for example 2,6-di-tert-butyl-4-methylphenol, 2-tert-butyl-4,6-dimethylphenol, 2,6-di-tert-butyl-4-ethylphenol, 2,6-di-tert-butyl-4-n-butylphenol, 2,6-di-tert-butyl-4-isobutylphenol, 2,6-dicyclopentyl-4-methylphenol, 2-(α-methylcyclohexyl)-4,6-dimethylphenol, 2,6-dioctadecyl-4-methylphenol, 2,4,6-tricyclohexylphenol, 2,6-di-tert-butyl-4-methoxymethylphenol, nonylphenols which are linear or branched in the side chains, for example, 2,6-di-nonyl-4-methylphenol, 2,4-dimethyl-6-(1'-methylundec-1'-yl)phenol, 2,4-dimethyl-6-(1'-methylheptadec-1'-yl)phenol, 2,4-dimethyl-6-(1'-methyltridec-1'-yl)phenol and mixtures thereof.
1.2. Alkylthiomethylphenols, for example 2,4-dioctylthiomethyl-6-tert-butylphenol, 2,4-dioctyl-thiomethyl-6-methylphenol, 2,4-dioctylthiomethyl-6-ethylphenol, 2,6-di-dodecylthiomethyl-4-nonylphenol.
1.3. Hydroquinones and alkylated hydroquinones, for example 2,6-di-tert-butyl-4-methoxyphenol, 2,5-di-tert-butylhydroquinone, 2,5-di-tert-amylhydroquinone, 2,6-diphenyl-4-octadecyloxyphenol, 2,6-di-tert-butylhydroquinone, 2,5-di-tert-butyl-4-hydroxyanisole, 3,5-di-tert-butyl-4-hydroxyanisole, 3,5-di-tert-butyl-4-hydroxyphenyl stearate, bis-(3,5-di-tert-butyl-4-hydroxyphenyl) adipate.
1.4. Tocopherols, for example α-tocopherol, β-tocopherol, γ-tocopherol, δ-tocopherol and mixtures thereof (Vitamin E).
1.5. Hydroxylated thiodiphenyl ethers, for example 2,2'-thiobis(6-tert-butyl-4-methylphenol), 2,2'-thiobis(4-octylphenol), 4,4'-thiobis(6-tert-butyl-3-methylphenol), 4,4'-thiobis(6-tert-butyl-2-methylphenol), 4,4'-thiobis-(3,6-di-sec-amylphenol), 4,4'-bis(2,6-dimethyl-4-hydroxyphenyl)disulfide.
1.6. Alkylidenebisphenols, for example 2,2'-methylenebis(6-tert-butyl-4-methylphenol), 2,2'-methylenebis(6-tert-butyl-4-ethylphenol), 2,2'-methylenebis[4-methyl-6-(α-methylcyclohexyl)-phenol], 2,2'-methylenebis(4-methyl-6-cyclohexylphenol), 2,2'-methylenebis(6-nonyl-4-methylphenol), 2,2'-methylenebis(4,6-di-tert-butylphenol), 2,2'-ethylidenebis(4,6-di-tert-butylphenol), 2,2'-ethylidenebis(6-tert-butyl-4-isobutylphenol), 2,2'-methylenebis[6-(α-methylbenzyl)-4-nonylphenol], 2,2'-methylenebis[6-(α,α-dimethylbenzyl)-4-nonylphenol], 4,4'-methylenebis-(2,6-di-tert-butylphenol), 4,4'-methylenebis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tris(5-tert-butyl-4-hydroxy-2-methylphenyl)butane, 1,1-bis(5-tert-butyl-4-hydroxy-2-methyl-phenyl)-3-n-dodecylmercaptobutane, ethylene glycol bis[3,3-bis(3'-tert-butyl-4'-hydroxyphenyl)butyrate], bis(3-tert-butyl-4-hydroxy-5-methyl-phenyl)dicyclopentadiene, bis[2-(3'-tert-butyl-2'-hydroxy-5'-methylbenzyl)-6-tert-butyl-4-methylphenyl]terephthalate, 1,1-bis-(3,5-dimethyl-2-hydroxyphenyl)butane, 2,2-bis-(3,5-di-tert-butyl-4-hydroxyphenyl)propane, 2,2-bis-(5-tert-butyl-4-hydroxy2-methylphenyl)-4-n-dodecylmercaptobutane, 1,1,5,5-tetra-(5-tert-butyl-4-hydroxy-2-methylphenyl)pentane.
1.7. O-, N- and S-benzyl compounds, for example 3,5,3',5'-tetra-tert-butyl-4,4'-dihydroxydibenzyl ether, octadecyl-4-hydroxy-3,5-dimethylbenzylmercaptoacetate, tridecyl-4-hydroxy-3,5-di-tert-butylbenzylmercaptoacetate, tris(3,5-di-tert-butyl-4-hydroxybenzyl)amine, bis(4-tert-butyl-3-hydroxy-2,6-dimethylbenzyl)dithioterephthalate, bis(3,5-di-tert-butyl-4-hydroxybenzyl)sulfide, isooctyl-3,5-di-tert-butyl-4-hydroxybenzylmercaptoacetate.
1.8. Hydroxybenzylated malonates, for example dioctadecyl-2,2-bis-(3,5-di-tert-butyl-2-hydroxybenzyl)-malonate, di-octadecyl-2-(3-tert-butyl-4-hydroxy-5-methylbenzyl)-malonate, didodecylmercaptoethyl-2,2-bis-(3,5-di-tert-butyl-4-hydroxybenzyl)malonate, bis[4-(1,1,3,3-tetramethylbutyl)phenyl]-2,2-bis(3,5-di-tert-butyl-4-hydroxybenzyl)malonate.
1.9. Aromatic hydroxybenzyl compounds, for example 1,3,5-tris-(3,5-di-tert-butyl-4-hydroxybenzyl)-2,4,6-trimethylbenzene, 1,4-bis(3,5-di-tert-butyl-4-hydroxybenzyl)-2,3,5,6-tetramethylbenzene, 2,4,6-tris(3,5-di-tert-butyl-4-hydroxybenzyl)phenol.
1.10. Triazine Compounds, for example 2,4-bis(octylmercapto)-6-(3,5-di-tert-butyl-4-hydroxyanilino)-1,3,5-triazine, 2-octylmercapto-4,6-bis(3,5-di-tert-butyl-4-hydroxyanilino)-1,3,5-triazine, 2-octylmercapto-4,6-bis(3,5-di-tert-butyl-4-hydroxyphenoxy)-1,3,5-triazine, 2,4,6-tris-(3,5-di-tert-butyl-4-hydroxyphenoxy)-1,2,3-triazine, 1,3,5-tris-(3,5-di-tert-butyl-4-hydroxybenzyl)isocyanurate, 1,3,5-tris(4-tert-butyl-3-hydroxy-2,6-dimethylbenzyl)isocyanurate, 2,4,6-tris-(3,5-di-tert-butyl-4-hydroxyphenylethyl)-1,3,5-triazine, 1,3,5-tris(3,5-di-tert-butyl-4-hydroxyphenylpropionyl)-hexahydro-1,3,5-triazine, 1,3,5-tris(3,5-dicyclohexyl-4-hydroxybenzyl)isocyanurate.
1.11. Benzylphosphonates, for example dimethyl-2,5-di-tert-butyl-4-hydroxybenzylphosphonate, diethyl-3,5-di-tert-butyl-4-hydroxybenzylphosphonate, dioctadecyl3,5-di-tert-butyl-4-hydroxybenzylphosphonate, dioctadecyl-5-tert-butyl-4-hydroxy-3-methylbenzylphosphonate, the calcium salt of the monoethyl ester of 3,5-di-tert-butyl-4-hydroxybenzylphosphonic acid.
1.12. Acylaminophenols, for example 4-hydroxylauranilide, 4-hydroxystearanilide, octyl N-(3,5-di-tert-butyl-4-hydroxyphenyl)carbamate.
1.13. Esters of β-(3,5-di-tert-butyl-4-hydroxyphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.14. Esters of β-(5-tert-butyl-4-hydroxy-3-methylphenyl)propionic acid with mono- or polyhydric alcohols, e.g. with methanol, ethanol, n-octanol, i-octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis-(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.15. Esters of β-(3,5-dicyclohexyl-4-droxyphenyl)propionic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.16. Esters of 3,5-di-tert-butyl-4-hydroxyphenyl acetic acid with mono- or polyhydric alcohols, e.g. with methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl)isocyanurate, N,N'-bis(hydroxyethyl)oxamide, 3-thiaundecanol, 3-thiapentadecanol, trimethylhexanediol, trimethylolpropane, 4-hydroxymethyl-1-phospha-2,6,7-trioxabicyclo[2.2.2]octane.
1.17. Amides of β-(3,5-di-tert-butyl-4-hydroxyphenyl)propionic acid e.g. N,N'-bis(3,5-di-tert-butyl-4-hydroxyphenylpropionyl)hexamethylenediamide, N,N'-bis(3,5-di-tert-butyl-4-hydroxyphenylpropionyl)trimethylenediamide, N,N'-bis(3,5-di-tert-butyl-4-hydroxyphenylpropionyl)-hydrazide, N,N'-bis[2-(3-[3,5-di-tert-butyl-4-hydroxyphenyl]propionyloxy)ethyl]oxamide (Naugard^{®}XL-1 supplied by Uniroyal).
1.18. Ascorbic acid (vitamin C)
1.19. Aminic antioxidants, for example N,N'-di-isopropyl-p-phenylenediamine, N,N'-di-sec-butyl-p-phenylenediamine, N,N'-bis(1,4-dimethylpentyl)-p-phenylenediamine, N,N'-bis(1-ethyl-3-methylpentyl)-p-phenylenediamine, N,N'-bis(1-methylheptyl)-p-phenylenediamine, N,N'-dicyclohexyl-p-phenylenediamine, N,N'-diphenyl-p-phenylenediamine, N,N'-bis(2-naphthyl)-p-phenylenediamine, N-isopropyl-N'-phenyl-p-phenylenediamine, N-(1,3-dimethylbutyl)-N'-phenyl-p-phenylenediamine, N-(1-methylheptyl)-N'-phenyl-p-phenylenediamine, N-cyclohexyl-N'-phenyl-p-phenlenediamine, 4-(p-toluenesulfamoyl)diphenylamine, N,N'-dimethyl-N,N'-di-sec-butyl-p-phenylenediamine, diphenylamine, N-allyldiphenylamine, 4-isopropoxydiphenylamine, N-phenyl-1-naphthylamine, N-(4-tert-octylphenyl)-1-naphthylamine, N-phenyl-2-naphthylamine, octylated diphenylamine, for example p,p'-di-tert-octyldiphenylamine, 4-n-butylaminophenol, 4-butyrylaminophenol, 4-nonanoylaminophenol, 4-dodecanoylaminophenol, 4-octadecanoylaminophenol, bis(4-methoxyphenyl)amine, 2,6-di-tert-butyl-4-dimethylaminomethylphenol, 2,4'-diaminodiphenylmethane, 4,4'-diaminodiphenylmethane, N,N,N',N'-tetramethyl-4,4'-diaminodiphenylmethane, 1,2-bis[(2-methylphenyl)amino]ethane, 1,2-bis(phenylamino)propane, (o-tolyl)biguanide, bis[4-(1',3'-dimethylbutyl)phenyl]amine, tert-octylated N-phenyl-1-naphthylamine, a mixture of monoand dialkylated tert-butyl/tert-octyldiphenylamines, a mixture of mono- and dialkylated nonyldiphenylamines, a mixture of mono- and dialkylated dodecyldiphenylamines, a mixture of mono- and dialkylated isopropyl/isohexyldiphenylamines, a mixture of mono- und dialkylated tert-butyldiphenylamines, 2,3-dihydro-3,3-dimethyl-4H-1,4-benzothiazine, phenothiazine, a mixture of mono- und dialkylated tert-butyl/tert-octylphenothiazines, a mixture of mono- und dialkylated tert-octyl-phenothiazines, N-allylphenothiazin, N,N,N',N'-tetraphenyl-1,4-diaminobut-2-ene, N,N-bis(2,2,6,6-tetramethyl-piperid-4-yl-hexamethylenediamine, bis(2,2,6,6-tetramethylpiperid-4-yl)sebacate, 2,2,6,6-tetramethylpiperidin-4-one, 2,2,6,6-tetramethylpiperidin-4-ol.
2. UV absorbers and light stabilisers
2.1. 2-(2'-Hydroxyphenyl)benzotriazoles, for example 2-(2'-hydroxy-5'-methylphenyl)-benzotriazole, 2-(3',5'-di-tert-butyl-2'-hydroxyphenyl)benzotriazole, 2-(5'-tert-butyl-2'-hydroxyphenyl)benzotriazole, 2-(2'-hydroxy-5'-(1,1,3,3-tetramethylbutyl)phenyl)benzotriazole, 2-(3',5'-di-tert-butyl-2'-hydroxyphenyl)-5-chloro-benzotriazole, 2-(3'-tert-butyl- 2'-hydroxy-5'-methylphenyl)-5-chloro-benzotriazole, 2-(3'-sec-butyl-5'-tert-butyl-2'-hydroxyphenyl)benzotriazole, 2-(2'-hydroxy-4'-octyloxyphenyl)benzotriazole, 2-(3',5'-di-tert-amyl-2'-hydroxyphenyl)benzotriazole, 2-(3',5'-bis-(α,α-dimethylbenzyl)-2'-hydroxyphenyl)benzotriazole, 2-(3'-tert-butyl-2'-hydroxy-5'-(2-octyloxycarbonylethyl)phenyl)-5-chloro-benzotriazole, 2-(3'-tert-butyl-5'-[2-(2-ethylhexyl-oxy)-carbonylethyl]-2'-hydroxyphenyl)-5-chloro-benzotriazole, 2-(3'-tert-butyl-2'-hydroxy-5'-(2-methoxycarbonylethyl)phenyl)-5-chloro-benzotriazole, 2-(3'-tert-butyl-2'-hydroxy-5'-(2-methoxycarbonylethyl)phenyl)benzotriazole, 2-(3'-tert-butyl-2'-hydroxy-5'-(2-octyloxycarbonyl-ethyl)phenyl)benzotriazole, 2-(3'-tert-butyl-5'-[2-(2-ethylhexyloxy)carbonylethyl]-2'-hydroxyphenyl)benzotriazole, 2-(3'-dodecyl-2'-hydroxy-5'-methylphenyl)benzotriazole, 2-(3'-tert-butyl-2'-hydroxy-5'-(2-isooctyloxycarbonylethyl)phenylbenzotriazole, 2,2'-methylene-bis[4-(1,1,3,3-tetramethylbutyl)-6-benzotriazole-2-ylphenol]; the transesterification product of 2-[3'-tert-butyl-5'-(2-methoxycarbonylethyl)-2'-hydroxyphenyl]-2H-benzotriazole with polyethylene glycol 300; [R-CH₂CH₂-COO-CH₂CH₂]₂ where R = 3'-tert-butyl-4'-hydroxy-5'-2H-benzotriazol-2-ylphenyl, 2-[2'-hydroxy-3'-(α,α-dimethylbenzyl)-5'-(1,1,3,3-tetramethylbutyl)-phenyl]-benzotriazole; 2-[2'-hydroxy-3'-(1,1,3,3-tetramethylbutyl)-5'-(α,α-dimethylbenzyl)-phenyl]benzotriazole.
2.2. 2-Hydroxybenzophenones, for example the 4-hydroxy, 4-methoxy, 4-octyloxy, 4-decyloxy, 4-dodecyloxy, 4-benzyloxy, 4,2',4'-trihydroxy and 2'-hydroxy-4,4'-dimethoxy derivatives.
2.3. Esters of substituted and unsubstituted benzoic acids, as for example 4-tertbutyl-phenyl salicylate, phenyl salicylate, octylphenyl salicylate, dibenzoyl resorcinol, bis(4-tert-butylbenzoyl) resorcinol, benzoyl resorcinol, 2,4-di-tert-butylphenyl 3,5-di-tert-butyl-4-hydroxybenzoate, hexadecyl 3,5-di-tert-butyl-4-hydroxybenzoate, octadecyl 3,5-di-tert-butyl-4-hydroxybenzoate, 2-methyl-4,6-di-tert-butylphenyl 3,5-di-tert-butyl-4-hydroxybenzoate.
2.4. Acrylates, for example ethyl α-cyano-β-β-diphenylacrylate, isooctyl α-cyano-β,β-diphenylacrylate, methyl α-carbomethoxycinnamate, methyl α-cyano-β-methyl-p-methoxy-cinnamate, butyl α-cyano-β-methyl-p-methoxy-cinnamate, methyl α-carbomethoxy-p-methoxycinnamate and N-(β-carbomethoxy-β-cyanovinyl)-2-methylindoline.
2.5. Nickel compounds, for example nickel complexes of 2,2'-thio-bis-[4-(1,1,3,3-tetramethylbutyl)phenol], such as the 1:1 or 1:2 complex, with or without additional ligands such as n-butylamine, triethanolamine or N-cyclohexyldiethanolamine, nickel dibutyldithiocarbamate, nickel salts of the monoalkyl esters, e.g. the methyl or ethyl ester, of 4-hydroxy-3,5-di-tert-butylbenzylphosphonic acid, nickel complexes of ketoximes, e.g. of 2-hydroxy-4-methylphenyl undecylketoxime, nickel complexes of 1-phenyl-4-lauroyl-5-hydroxypyrazole, with or without additional ligands.
2.6. Sterically hindered amines, for example bis(2,2,6,6-tetramethyl-4-piperidyl)sebacate, bis(2,2,6,6-tetramethyl-4-piperidyl)succinate, bis(1,2,2,6,6-pentamethyl-4-piperidyl)sebacate, bis(1-octyloxy-2,2,6,6-tetramethyl-4-piperidyl)sebacate, bis(1,2,2,6,6-pentamethyl-4-piperidyl) n-butyl-3,5-di-tert-butyl-4-hydroxybenzylmalonate, the condensate of 1-(2-hydroxyethyl)-2,2,6,6-tetramethyl-4-hydroxypiperidine and succinic acid, linear or cyclic condensates of N,N'-bis(2,2,6,6-tetramethyl-4-piperidyl)hexamethylenediamine and 4-tert-octylamino-2,6-dichloro-1,3,5-triazine, tris(2,2,6,6-tetramethyl-4-piperidyl)nitrilotriacetate, tetrakis(2,2,6,6-tetramethyl-4-piperidyl)-1,2,3,4-butane-tetracarboxylate, 1,1'-(1,2-ethanediyl)-bis(3,3,5,5-tetramethylpiperazinone), 4-benzoyl-2,2,6,6-tetramethylpiperidine, 4-stearyloxy-2,2,6,6-tetramethylpiperidine, bis(1,2,2,6,6-pentamethylpiperidyl)-2-n-butyl-2-(2-hydroxy-3,5-di-tert-butylbenzyl)-malonate, 3-n-octyl-7,7,9,9-tetramethyl-1,3,8-triazaspiro[4.5]decan-2,4-dione, bis(1-octyloxy-2,2,6,6-tetramethylpiperidyl)sebacate, bis(1-octyloxy-2,2,6,6-tetramethylpiperidyl)succinate, linear or cyclic condensates of N,N'-bis-(2,2,6,6-tetramethyl-4-piperidyl)hexamethylenediamine and 4-morpholino-2,6-dichloro-1,3,5-triazine, the condensate of 2-chloro-4,6-bis(4-n-butylamino-2,2,6,6-tetramethylpiperidyl)-1,3,5-triazine and 1,2-bis(3-aminopropylamino)-ethane, the condensate of 2-chloro-4,6-di-(4-n-butylamino-1,2,2,6,6-pentamethylpiperidyl)-1,3,5-triazine and 1,2-bis-(3-aminopropylamino)ethane, 8-acetyl-3-dodecyl-7,7,9,9-tetramethyl-1,3,8-triazaspiro[4.5]decane-2,4-dione, 3-dodecyl-1-(2,2,6,6-tetramethyl-4-piperidyl)pyrrolidin-2,5-dione, 3-dodecyl-1-(1,2,2,6,6-pentamethyl-4-piperidyl)pyrrolidine-2,5-dione, a mixture of 4-hexadecyloxy- and 4-stearyloxy-2,2,6,6-tetramethylpiperidine, a condensation product of N,N'-bis(2,2,6,6-tetramethyl-4-piperidyl)hexamethylenediamine and 4-cyclohexylamino-2,6-dichloro-1,3,5-triazine, a condensation product of 1,2-bis(3-aminopropylamino)ethane and 2,4,6-trichloro-1,3,5-triazine as well as 4-butylamino-2,2,6,6-tetramethylpiperidine (CAS Reg. No. [136504-96-6]); N-(2,2,6,6-tetramethyl-4-piperidyl)-n-dodecylsuccinimid, N-(1,2,2,6,6-pentamethyl-4-piperidyl)-n-dodecylsuccinimid, 2-undecyl-7,7,9,9-tetramethyl-1 - oxa-3,8-diaza-4-oxo-spiro[4,5]decane, a reaction product of 7,7,9,9-tetramethyl-2-cycloundecyl-1-oxa-3,8-diaza-4-oxospiro [4,5]decane und epichlorohydrin, 1,1-bis(1,2,2,6,6-pentamethyl-4-piperidyloxycarbonyl)-2-(4-methoxyphenyl)ethene, N,N'-bis-formyl-N,N'-bis(2,2,6,6-tetramethyl-4-piperidyl)hexamethylenediamine, diester of 4-methoxy-methylene-malonic acid with 1,2,2,6,6-pentamethyl-4-hydroxypiperidine, poly[methylpropyl-3-oxy-4-(2,2,6,6-tetramethyl-4-piperidyl)]siloxane, reaction product of maleic acid anhydride-α-olefin-copolymer with 2,2,6,6-tetramethyl-4-aminopiperidine or 1,2,2,6,6-pentamethyl-4-aminopiperidine.
2.7. Oxamides, for example 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'-bis(3-dimethylaminopropyl)oxamide, 2-ethoxy-5-tert-butyl-2'-ethoxanilide and its mixture with 2-ethoxy-2'-ethyl-5,4'-di-tert-butoxanilide, mixtures of o- and p-methoxy-disubstituted oxanilides and mixtures of o- and p-ethoxy-disubstituted oxanilides.
2.8. 2-(2-Hydroxyphenyl)-1,3,5-triazines, for example 2,4,6-tris(2-hydroxy-4-octyloxyphenyl)-1,3,5-triazine, 2-(2-hydroxy-4-octyloxyphenyl)-4,6-bis(2,4-dimethylphenyl)-1,3,5-triazine, 2-(2,4-dihydroxyphenyl)-4,6-bis(2,4-dimethylphenyl)-1,3,5-triazine, 2,4-bis(2-hydroxy-4-propyloxyphenyl)-6-(2,4-dimethylphenyl)-1,3,5-triazine, 2-(2-hydroxy-4-octyloxyphenyl)-4,6-bis(4-methylphenyl)-1,3,5-triazine, 2-(2-hydroxy-4-dodecyloxyphenyl)-4,6-bis(2,4-dimethylphenyl)-1,3,5-triazine, 2-(2-hydroxy-4-tridecyloxyphenyl)-4,6-bis(2,4-dimethylphenyl)-1,3,5-triazine, 2-[2-hydroxy-4-(2-hydroxy-3-butyloxy-propoxy)phenyl]-4,6-bis(2,4-dimethyl)-1,3,5-triazine, 2-[2-hydroxy-4-(2-hydroxy-3-octyloxy-propyloxy)phenyl]-4,6-bis(2,4-dimethyl)-1,3,5-triazine, 2-[4-(dodecyloxy/tridecyloxy-2-hydroxypropoxy)-2-hydroxy-phenyl]-4,6-bis(2,4-dimethylphenyl)-1,3,5-triazine, 2-[2-hydroxy-4-(2-hydroxy-3-dodecyloxy-propoxy)phenyl]-4,6-bis(2,4-dimethylphenyl)-1,3,5-triazine, 2-(2-hydroxy-4-hexyloxy)phenyl-4,6-diphenyl-1,3,5-triazine, 2-(2-hydroxy-4-methoxyphenyl)-4,6-diphenyl-1,3,5-triazine, 2,4,6-tris[2-hydroxy-4-(3-butoxy-2-hydroxy-propoxy)phenyl]-1,3,5-triazine, 2-(2-hydroxyphenyl)-4-(4-methoxyphenyl)-6-phenyl-1,3,5-triazine, 2-(2-hydroxy-4-[3-(2-ethylhexyl-1-oxy)-2-hydroxypropyloxy]phenyl}-4,6-bis(2,4-dimethylphenyl)-1,3,5-triazine.
3. Metal deactivators, for example N,N'-diphenyloxamide, N-salicylal-N'-salicyloyl hydrazine, N,N'-bis(salicyloyl) hydrazine, N,N'-bis(3,5-di-tert-butyl-4-hydroxyphenylpropionyl) hydrazine, 3-salicyloylamino-1,2,4-triazole, bis(benzylidene)oxalyl dihydrazide, oxanilide, isophthaloyl dihydrazide, sebacoyl bisphenylhydrazide, N,N'-diacetyladipoyl dihydrazide, N,N'-bis(salicyloyl)oxalyl dihydrazide, N,N'-bis(salicyloyl)thiopropionyl dihydrazide.
4. Phosphites and phosphonites, for example triphenyl phosphite, diphenyl alkyl phosphites, phenyl dialkyl phosphites, tris(nonylphenyl) phosphite, trilauryl phosphite, trioctadecyl phosphite, distearyl pentaerythritol diphosphite, tris(2,4-di-tert-butylphenyl) phosphite, diisodecyl pentaerythritol diphosphite, bis(2,4-di-tert-butylphenyl) pentaerythritol diphosphite, bis(2,6-di-tert-butyl-4-methylphenyl)-pentaerythritol diphosphite, diisodecyloxypentaerythritol diphosphite, bis(2,4-di-tert-butyl-6-methylphenyl)pentaerythritol diphosphite, bis(2,4,6-tris(tert-butylphenyl)pentaerythritol diphosphite, tristearyl sorbitol triphosphite, tetrakis(2,4-di-tert-butylphenyl) 4,4'-biphenylene diphosphonite, 6-isooctyloxy-2,4,8,10-tetra-tert-butyl-12H-dibenz-[d,g]-1,3,2-dioxaphosphocin, bis(2,4-di-tert-butyl-6-methylphenyl) methyl phosphite, bis(2,4-di-tert-butyl-6-methylphenyl) ethyl phosphite, 6-fluoro-2,4,8,10-tetra-tert-butyl-12-methyl-dibenz[d,g]-1,3,2-dioxaphosphocin, 2,2',2"-nitrilo[triethyltris(3,3',5,5'-tetra-tert-butyl-1,1'-biphenyl-2,2'-diyl)phosphite], 2-ethylhexyl(3,3',5,5'-tetra-tert-butyl-1,1'-biphenyl-2,2'-diyl)phosphite, 5-butyl-5-ethyl-2-(2,4,6-tri-tert-butylphenoxy)-1,3,2-dioxaphosphirane.
   Especially preferred are the following phosphites:
   Tris(2,4-di-tert-butylphenyl) phosphite (Irgafos^{®}168, Ciba-Geigy), tris(nonylphenyl) phosphite, 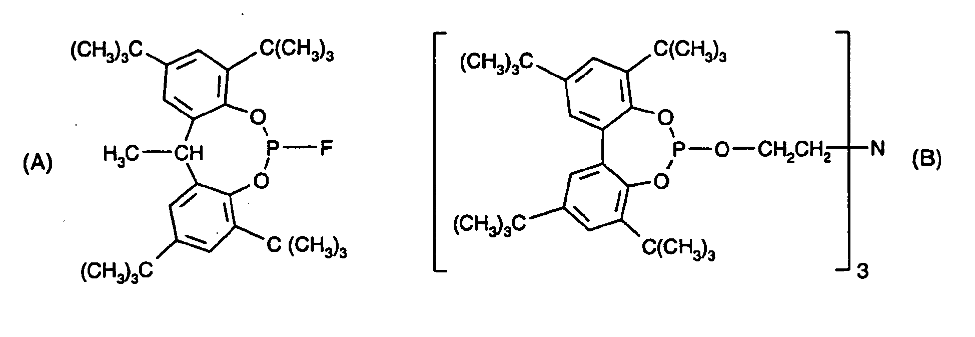 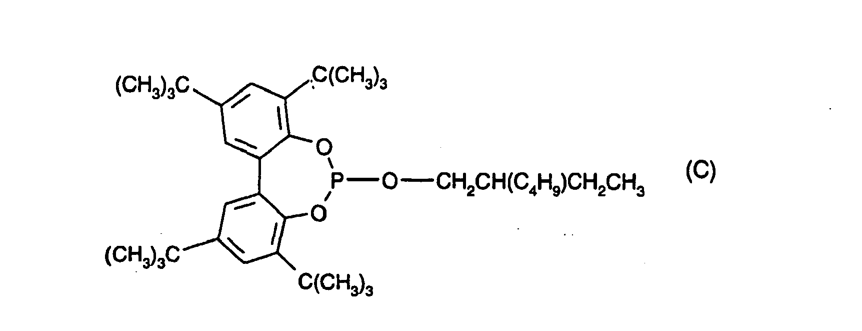 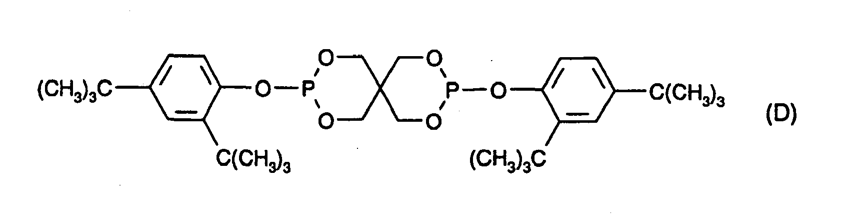 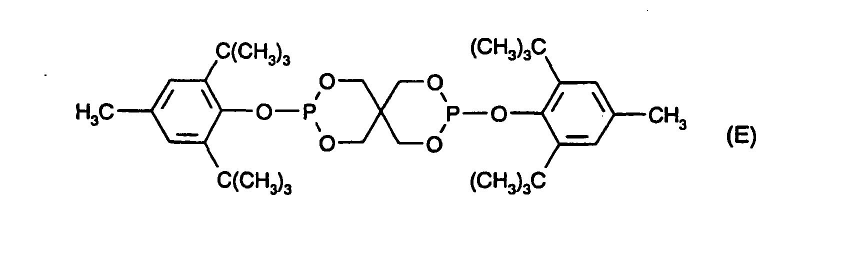 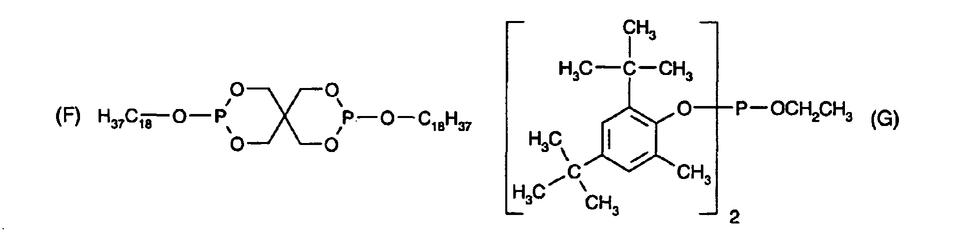
5. Hydroxylamines, for example, N,N-dibenzylhydroxylamine, N,N-diethylhydroxylamine, N,N-dioctylhydroxylamine, N,N-dilaurylhydroxylamine, N,N-ditetradecylhydroxylamine, N,N-dihexadecylhydroxylamine, N,N-dioctadecylhydroxylamine, N-hexadecyl-N-octadecylhydroxylamine, N-heptadecyl-N-octadecylhydroxylamine, N,N-dialkylhydroxylamine derived from hydrogenated tallow amine.
6. Nitrones, for example, N-benzyl-alpha-phenyl-nitrone, N-ethyl-alpha-methyl-nitrone, N-octyl-alpha-heptyl-nitrone, N-lauryl-alpha-undecyl-nitrone, N-tetradecyl-alpha-tridcyl-nitrone, N-hexadecyl-alpha-pentadecyl-nitrone, N-octadecyl-alpha-heptadecyl-nitrone, N-hexadecyl-alpha-heptadecyl-nitrone, N-ocatadecyl-alpha-pentadecyl-nitrone, N-heptadecyl-alpha-heptadecyl-nitrone, N-octadecyl-alpha-hexadecyl-nitrone, nitrone derived from N,N-dialkylhydroxylamine derived from hydrogenated tallow amine.
7. Thiosynergists, for example, dilauryl thiodipropionate or distearyl thiodipropionate.
8. Peroxide scavengers, for example esters of β-thiodipropionic acid, for example the lauryl, stearyl, myristyl or tridecyl esters, mercaptobenzimidazole or the zinc salt of 2-mercaptobenzimidazole, zinc dibutyldithiocarbamate, dioctadecyl disulfide, pentaerythritol tetrakis(β-dodecylmercapto)propionate.
9. Polvamide stabilisers, for example, copper salts in combination with iodides and/or phosphorus compounds and salts of divalent manganese.
10. Basic co-stabilisers, for example, melamine, polyvinylpyrrolidone, dicyandiamide, triallyl cyanurate, urea derivatives, hydrazine derivatives, amines, polyamides, polyurethanes, alkali metal salts and alkaline earth metal salts of higher fatty acids for example calcium stearate, zinc stearate, magnesium behenate, magnesium stearate, sodium ricinoleate and potassium palmitate, antimony pyrocatecholate or zink pyrocatecholate.
11. Nucleating agents, for example, inorganic substances such as talcum, metal oxides such as titanium dioxide or magnesium oxide, phosphates, carbonates or sulfates of, preferably, alkaline earth metals; organic compounds such as mono- or polycarboxylic acids and the salts thereof, e.g. 4-tert-butylbenzoic acid, adipic acid, diphenylacetic acid, sodium succinate or sodium benzoate; polymeric compounds such as ionic copolymers (ionomers). Especially preferred are 1,3:2,4-bis(3',4'-dimethylbenzylidene)sorbitol, 1,3:2,4-di(paramethyldibenzylidene)sorbitol, und 1,3:2,4-di(benzylidene)sorbitol.
12. Fillers and reinforcing agents, for example, calcium carbonate, silicates, glass fibres, glass bulbs, asbestos, talc, kaolin, mica, barium sulfate, metal oxides and hydroxides, carbon black, graphite, wood flour and flours or fibers of other natural products, synthetic fibers.
13. Other additives, for example, plasticisers, lubricants, emulsifiers, pigments, rheology additives, catalysts, flow-control agents, optical brighteners, flameproofing agents, antistatic agents and blowing agents.
14. Benzofuranones and indolinones, for example those disclosed in U.S. 4,325,863; U.S. 4,338,244; U.S. 5,175,312; U.S. 5,216,052; U.S. 5,252,643; DE-A-4316611; DE-A-4316622; DE-A-4316876; EP-A-0589839 or EP-A-0591102 or 3-[4-(2-acetoxyethoxy)-phenyl]-5,7-di-tert-butyl-benzofuran-2-one, 5,7-di-tert-butyl-3-[4-(2-stearoyloxyethoxy)phenyl]benzofuran-2-one, 3,3'-bis[5,7-di-tert-butyl-3-(4-[2-hydroxyethoxy]phenyl)benzofuran-2-one], 5,7-di-tert-butyl-3-(4-ethoxyphenyl)benzofuran-2-one, 3-(4-acetoxy-3,5-dimethylphenyl)-5,7-di-tert-butyl-benzofuran-2-one, 3-(3,5-dimethyl-4-pivaloyloxyphenyl)-5,7-di-tert-butyl-benzofuran-2-one, 3-(3,4-dimethylphenyl)-5,7-di-tert-butyl-benzofuran-2-one, 3-(2,3-dimethylphenyl)-5,7-di-tert-butyl-benzofuran-2-one.
15. Amine oxides for example amine oxide derivatives as disclosed in U.S. Patent Nos. 5,844,029 and 5,880,191, didecyl methyl amine oxide, tridecyl amine oxide, tridodecyl amine oxide and trihexadecyl amine oxide. U.S. Patent Nos. 5,844,029 and 5,880,191 disclose the use of saturated hydrocarbon amine oxides towards the stabilization of thermoplastic resins. It is disclosed that the thermoplastic compositions may further contain a stabilizer or mixture of stabilizers selected from phenolic antioxidants, hindered amine light stabilizers, ultraviolet light absorbers, organic phosphorus compounds, alkaline metal salts of fatty acids and thiosynergists. The co-use of amine oxides with other stabilizers towards stabilizing polyolefins is not exemplified.
The compositions may also contain a further flame retardant, for instance an organic phosphite or phosphate, such as

tetraphenyl resorcinol diphosphite (e.g. FYROLFLE^{®} RDP, Akzo Nobel), triphenyl phosphate,
ammonium polyphosphate (APP; e.g. HOSTAFLAM^{®} AP750),
resorcinol diphosphate oligomer (RDP),
melamine phosphates,
melamine pyrophosphates,
ethylenediamine diphosphate (EDAP).

Particularly preferred additives are phenolic antioxidants (item 1 of the list), further sterically hindered amines (item 2.6 of the list), light stabilizers of the benzotriazole and/or o-hydroxyphenyltriazine class (items 2.1 and 2.8 of the list), phosphites and phosphonites (item 4 of the list) and peroxide-destroying compounds (item 5.) of the list.

Additional additives (stabilizers) which are also particularly preferred are benzofuran-2-ones, such as described, for example, in US-A-4,325,863, US-A-4,338,244 or US-A-5,175,312.

The instant composition can additionally contain another UV absorber selected from the group consisting of the s-triazines, the oxanilides, the hydroxybenzophenones, benzoates and the α-cyanoacrylates. Particularly, the instant composition may additionally contain an effective stabilizing amount of at least one other 2-hydroxyphenyl-2H-benzotriazole; another tris-aryl-s-triazine; or hindered amine or mixtures thereof. Preferred are additional components selected from pigments, dyes, plasticizers, antioxidants, thixotropic agents, levelling assistants, basic costabilizers, further light stabilizers like UV absorbers and/or sterically hindered amines, metal passivators, metal oxides, organophosphorus compounds, hydroxylamines, and mixtures thereof, especially pigments, phenolic antioxidants, calcium stearate, zinc stearate, UV absorbers of the 2-(2'-hydroxyphenyl)benzotriazole and 2-(2-Hydroxyphenyl)-1,3,5-triazine classes, and sterically hindered amines.

In this invention, the fluorinated polyolefin is not necessarily extruded at high shear. The additives of the invention and optional further components may be added to the polymer material individually or mixed with one another. If desired, the individual components can be mixed with one another before incorporation into the polymer for example by dry blending, compaction or in the melt. Subject of the invention therefore is also a flame retardant additive combination comprising (i.) a sterically hindered amine of the nitroxyl, hydroxylamine, alkoxyamine or hydroxyalkoxyamine class, (ii.) a fluorinated polyolefin and (iii.) a conventional flame retardant, which is selected from the group consisting of the halogenated flame retardants.

Conveniently, the additives of above components (i), (ii), (iii) and possibly further additives as described above may be dry blended and then extruded, for instance in a twin screw extruder at 180-220 °C, with or without nitrogen atmosphere. The material thus obtained may be further processed according to known methods. The surface of the articles formed do not show any loss of gloss or any kind of roughness.

Further, the instant invention pertains to a process for imparting light stability and flame retardancy to an organic polymeric substrate, which process comprises adding to said polymeric substrate a combination of an effective flame retarding amount of a synergistic mixture of a sterically hindered amine of the nitroxyl, hydroxylamine, alkoxyamine or hydroxyalkoxyamine class and a fluorinated polyolefin, together with a halogenated flame retardant.

The incorporation of the additives of the invention and optional further components into the polymer is carried out by known methods such as dry blending in the form of a powder, or wet mixing in the form of solutions, dispersions or suspensions for example in an inert solvent, water or oil. The additives of the invention and optional further additives may be incorporated, for example, before or after molding or also by applying the dissolved or dispersed additve or additive mixture to the polymer material, with or without subsequent evaporation of the solvent or the suspension/dispersion agent. They may be added directly into the processing apparatus (e.g. extruders, internal mixers, etc), e.g. as a dry mixture or powder or as solution or dispersion or suspension or melt.

The incorporation can be carried out in any heatable container equipped with a stirrer, e.g. in a closed apparatus such as a kneader, mixer or stirred vessel. The incorporation is preferably carried out in an extruder or in a kneader. It is immaterial whether processing takes place in an inert atmosphere or in the presence of oxygen.

The addition of the additive or additive blend to the polymer can be carried out in all customary mixing machines in which the polymer is melted and mixed with the additives. Suitable machines are known to those skilled in the art. They are predominantly mixers, kneaders and extruders.

The process is preferably carried out in an extruder by introducing the additive during processing.

Particularly preferred processing machines are single-screw extruders, contrarotating and corotating twin-screw extruders, planetary-gear extruders, ring extruders or cokneaders. It is also possible to use processing machines provided with at least one gas removal compartment to which a vacuum can be applied.

Suitable extruders and kneaders are described, for example, in Handbuch der Kunststoffextrusion, Vol. 1 Grundlagen, Editors F. Hensen, W. Knappe, H. Potente, 1989, pp. 3-7, ISBN:3-446-14339-4 *(*Vol. 2 Extrusionsanlagen 1986, ISBN 3-446-14329-7*).*

For example, the screw length is 1 - 60 screw diameters, preferably 35-48 screw diameters. The rotational speed of the screw is preferably 10 - 600 rotations per minute (rpm), very particularly preferably 25 - 300 rpm.

The maximum throughput is dependent on the screw diameter, the rotational speed and the driving force. The process of the present invention can also be carried out at a level lower than maximum throughput by varying the parameters mentioned or employing weighing machines delivering dosage amounts.

If a plurality of components are added, these can be premixed or added individually.

The additives of the invention and optional further additives can also be sprayed onto the polymer material. They are able to dilute other additives (for example the conventional additives indicated above) or their melts so that they can be sprayed also together with these additives onto the material. Addition by spraying during the deactivation of the polymerization catalysts is particularly advantageous; in this case, the steam evolved may be used for deactivation of the catalyst. In the case of spherically polymerized polyolefins it may, for example, be advantageous to apply the additives of the invention, optionally together with other additives, by spraying.

The additives of the invention and optional further additives can also be added to the polymer in the form of a masterbatch ("concentrate") which contains the components in a concentration of, for example, about 1 % to about 40% and preferably 2 % to about 20 % by weight incorporated in a polymer. The polymer must not be necessarily of identical structure than the polymer where the additives are added finally. In such operations, the polymer can be used in the form of powder, granules, solutions, suspensions or in the form of latices.

Incorporation can take place prior to or during the shaping operation. The materials containing the additives of the invention described herein preferably are used for the production of molded articles, for example rotomolded articles, injection molded articles, and profiles. Thus, a molded polymer article made flame retardant by the incorporation of
(i.) a sterically hindered amine of the nitroxyl, hydroxylamine, alkoxyamine or hydroxyalkoxyamine class,
(ii.) a fluorinated polyolefin, and (iii.) a flame retardant, which is selected from the group consisting of the halogenated flame retardants,
is another object of the invention.

The effective flame retarding amount of component (B) is that needed to show flame retarding efficacy as measured by one of the standard methods used to assess flame retardancy. These include the NFPA 701 Standard Methods of Fire Tests for Flame-Resistant Textiles and Films, 1989 and 1996 editions; the UL 94 Test for Flammability of Plastic Materials for Parts in Devices and Appliances, 5th Edition, October 29, 1996; Limiting Oxygen Index (LOI), ASTM D-2863; and Cone Calorimetry, ASTM E-1354. Ratings according to the UL 94 V test are as compiled in the following table:

| Rating | Afterflame time | Burning drips | Burn to Clamp |
|---|---|---|---|
| V-0 | < 10 s | no | no |
| V-1 | < 30 s | no | no |
| V-2 | < 30 s | yes | no |
| Fail | < 30 s | | yes |
| Fail | > 30 s | | no |

Coadditives found particularly useful for use with the instant compounds of components (a)-(j) in flame retardant compositions are as follows:

### UV absorbers:

2-(2-hydroxy-3,5-di-α-cumylphenyl)-2H-benzotriazole, (TINUVIN^{®} 234, Ciba Specialty Chemicals Corp.);
2-(2-hydroxy-5-methylphenyl)-2H-benzotriazole, (TINUVIN^{®} P, Ciba Specialty Chemicals Corp.);
5-chloro-2-(2-hydroxy-3,5-di-tert-butylphenyl)-2H-benzotriazole, (TINUVIN^{®} 327, Ciba Specialty Chemicals Corp.);
2-(2-hydroxy-3,5-di-tert-amylphenyl)-2H-benzotriazole, (TINUVIN^{®} 328, Ciba Specialty Chemicals Corp.);
2-(2-hydroxy-3-α-cumyl-5-tert-octylphenyl)-2H-benzotriazole, (TINUVIN^{®} 928, Ciba Specialty Chemicals Corp.);
2,4-di-tert-butylphenyl 3,5-di-tert-butyl-4-hydroxybenzoate, (TINUVIN^{®} 120, Ciba Specialty Chemicals Corp.);
2-hydroxy-4-n-octyloxybenzophenone, (CHIMASSORB^{®} 81, Ciba Specialty Chemicals Corp.);
2,4-bis(2,4-dimethyphenyl)-6-(2-hydroxy-4-octyloxyphenyl)-s-triazine, (CYASORB^{®} 1164, Cytec).

The following examples are meant for illustrative purposes. Where given, room temperature depicts a temperature in the range 20-25°C. Percentages are by weight of the polymer substrate unless otherwise indicated.

### Test Methods

NFPA 701 Standard Methods of Fire Tests for Flame-Resistant Textiles and Films, 1989 and 1996 editions;
UL 94 Test for Flammability of Plastic Materials for Parts in Devices and Appliances, 5th Edition, October 29, 1996;
Limiting Oxygen Index (LOI), ASTM D-2863;
Cone Calorimetry, ASTM E-1 or ASTM E 1354;
ASTM D 2633-82, burn test.

### Test Compounds

NO*1 is bis(1-oxyl-2,2,6,6-tetramethylpiperidin-4-yl) sebacate, (Prostab^{™} 5415, Ciba Specialty Chemicals Corp.),
NOH-1 is bis(1-hydroxy-2,2,6,6-tetramethylpiperidin-4-yl) sebacate,
NOR-1 is the reaction product of 2,4-bis[(1-cyclohexyloxy-2,2,6,6-piperidin-4-yl)butylamino]-6-chloro-s-triazine with N,N'-bis(3-aminopropyl)ethylenediamine) [CAS Reg. No. 191680-81-6];
NOR-2 is 1-cyclohexyloxy-2,2,6,6-tetramethyl-4-octadecylaminopiperidine;
NOR-3 is bis(1-octyloxy-2,2,6,6-tetramethylpiperidin-4-yl) sebacate;
NOR-4 is 2,4-bis[(1-cyclohexyloxy-2,2,6,6-tetramethylpiperidin-4-yl)butylamino]-6-(2-hydroxyethylamino-s-triazine;
NOR-5 is bis(1-cyclohexyloxy-2,2,6,6-tetramethylpiperidin-4-yl) adipate;
NOR-6 is 1-(2-hydroxy-2-methylpropoxy)-4-octadecanoyloxy-2,2,6,6-tetramethylpiperidine.
DBDPO is decabromodiphenyl oxide,
FR-1 is tris[3-bromo-2,2-bis(bromomethyl)propyl] phosphate, (PB 370^{®}, FMC Corp.).
FR-2 is ammonium polyphosphate (APP).
FR-3 is bis(2,3-dibromopropyl) ether of tetrabromobisphenol A (PE68).
FR-4 is ammonium polyphosphate/synergist blend, HOSTAFLAM^{®}AP750.
FR-5 is decabromodiphenyl oxide (DBDPO; obtained from Dead Sea Bromine).
FR-6 is ethylene bis-(tetrabromophthalimide), (SAYTEX^{®} BT-93).
FR-7 is melamine phosphate, MELAPUR^{®} P 46.
FR-8 is ammonium polyphosphate, EXOLIT^{®} AP752.
PTFE is polytetrafluoroethylene (Teflon^{®} 6C; E. I. Du Pont).

### Example 1

Molding grade polypropylene (Profax^{®} 6501; Montell) is dry blended with the test additives and then melt compounded in a twin screw extruder at 220°C. Base stabilization is 500 ppm N,N-di(alkyl)hydroxylamine produced by the direct oxidation of N,N-di(hydrogenated tallow)amine (Irgastab^{®} FS-042) and 500 ppm calcium stearate. Plaques (125 mil) are prepared by injection molding from the formulations using a Boy Injection Molder at 475°F (246°C). The specimens are tested for flame retardancy according to the UL-94 vertical burn test specifications. The results are shown below.

The plaques are tested for flame retardancy by the UL 94V thick section test. The time in seconds for the plaques to extinguish after the insult flame is removed is reported as "After Flame". The time in seconds that the plaques glow after the flame incurred from the second insult flame is extinguished is reported as "Afterglow".. Efficacy as a flame retardant is demonstrated when low After Flame times are observed relative to a blank sample containing no flame retardant. The average time for 5 samples is reported in the table below. Additive levels are reported in weight percent based on polymer.

The entry "xxx" means that the sample is completely consumed and could not be reignited.

DBDPO at the 5 % level does not provide adequate flame retardancy. However, when this level of DBDPO is augmented with only 0.25 % NOH-1 and 0.25 % PTFE, the flame retardancy is greatly improved.

### Example 2

Polyethylene fibers are prepared from fiber grade polyethylene by dry blending with test additives and melt compounding at 400 (204.44°C) Fibers are extruded from this formulation using a Hills laboratory scale fiber extruder. Socks are knitted from the fibers and are tested for flame retardancy according to NFPA 701 vertical burn method. Polyethylene fibers contain 0.5%, 1% or 2% of an additive of present compounds (a)-(j) in combination with 10 % by weight of a classic brominated flame retardant decabromodiphenyl oxide (DBDPO); bis(2,3-dibromopropyl) ether of tetrabromobis phenol A (PE68); or ethylene bis-tetrabromophthalimide (SAYTEX^{®} BT-93); and 0.1 % by weight of PTFE. These formulated fibers are tested for flame retardancy according to NFPA 701.

The fibers containing both an additive of components (a)-(j) of the present invention together with PTFE and a classic brominated flame retardant exhibit enhanced flame retardancy compared to the classic flame retardant alone.

### Example 3

Molding grade polypropylene (Profax^{®} 6501; Montell) is dry blended with the test additives given below and then melt compounded in a twin screw extruder at 200°C under nitrogen. Base stabilization is 500 ppm N,N-di(alkyl)hydroxylamine produced by the direct oxidation of N,N-di(hydrogenated tallow)amine (Irgastab^{®} FS-042) and 500 ppm calcium stearate. Plaques (125 mil) are prepared by injection molding from the formulations using a Boy Injection Molder at 475°F (246°C). The specimens are tested for flame retardancy according to the UL-94 vertical burn test specifications. The results are shown below.

The plaques are tested for flame retardancy by the UL 94V thick section test. The ratings achievable are V-0 (best rating), V-1, and V-2. Additive levels are reported in weight percent based on the total composition.

| Formulation | Additive | UL-94 Rating |
|---|---|---|
| 1 (control) | none | fail |
| | | |
| 2 | 13 % FR-1 | V-2 |
| | | |
| 3 | 13 % FR-1 | V-2 |
| | + 4 % Sb₂O₃ | |
| | | |
| 4 | 13 % FR-1 | V-2 |
| | + 1.0 % PTFE | |
| | | |
| 5 | 13 % FR-1 | V-2 |
| | + 1.0 % NOR-1 | |
| | | |
| 6 | 13 % FR-1 | V-0 |
| | + 1.0 % NOR-1 | |
| | + 0.5 % PTFE | |

The results show that the requirements of the V-0 rating in the UL-94 vertical burning test are only met by the composition of present invention (formulation No. 6).

### Example 4

Foam grade polyethylene is dry blended with test additives and then melt compounded into pellets. The pelletized fully formulated resin is then blown into foam.

The polyethylene foam prepared contains an instant additive of compounds (a)-(j) in combination with a classic brominated flame retardant FR-1, FR-3, FR-5 (DBDPO), or FR-6, and 0.1 % of PTFE. The formulated foam is tested for flame retardancy according to the UL-94 burn test method.

The foam containing both an additive of present components (a)-(j) together with PTFE and a classic brominated flame retardant together with PTFE exhibits enhanced flame retardancy compared to foam containing the classic halogenated flame retardant alone.

### Example 5

Wire & cable grade polyethylene is dry blended with test additives and then melt compounded into pellets. The pelletized fully formulated resin is then extruded onto wire.

Test specimens are tested for flame retardancy using the ASTM D 2633-82 burn test conditions. The formulations containing both a compound of the present invention selected from compounds (a)-(j) and a classic brominated flame retardant FR-1, FR-3, FR-5 (DBDPO), or FR-6 together with 0.2 % of PTFE exhibits enhanced flame retardancy compared to the classic halogenated flame retardant alone.

### Example 6

Fiber grade polyethylene is dry-blended with test additives. In addition to a compound of present components (a)-(j), selected brominated flame retardants together with PTFE are also included in the various formulations. Non-woven fabrics are produced from the polymer blend formulations by a spun-bonded or melt-blown process.

The non-woven fabrics made thereby are tested for flame retardancy according to the NFPA 701 vertical burn test specifications. The fabrics containing the present compounds (a)-(j) together with PTFE and selected brominated flame retardants exhibit flame retardancy.

### Example 7

Fiber grade polypropylene is dry-blended with test additives. In addition to a present compound (a)-(j), selected brominated flame retardants and PTFE are also included in the various formulations. Non-woven fabrics are produced from the polymer blend formulations by a spun-bonded or melt-blown process.

The non-woven fabrics made thereby are tested for flame retardancy according to the NFPA 701 vertical burn test specifications. The fabrics containing an additive selected from present components (a)-(j) together with PTFE and selected brominated flame retardants exhibit flame retardancy.

### Example 8

Molding grade polystyrene is dry-blended with test additives and then melt compounded. In addition to an additive selected from present components (a)-(j), selected brominated flame retardants and PTFE are also included in the test formulations. Specimens are injection molded from these test formulations.

The specimens are tested for flame retardancy according to the UL-94 burn test specifications. The molded specimens containing the present compounds (a)-(j) together with PTFE and selected brominated flame retardants exhibit flame retardancy.

### Example 9

Foam grade polystyrene is dry-blended with test additives and then melt compounded. In addition to an additive selected from present components (a)-(j) and PTFE, selected brominated flame retardants are also included in these test formulations. Foam polystyrene specimens are prepared from these test formulations.

The specimens are tested for flame retardancy according to the UL-94 burn test specifications. The foam specimens containing the present compounds selected from components (a)-(j) together with PTFE and brominated flame retardants exhibit flame retardancy.

### Example 10

Molding grade ABS is dry blended with the an additive selected from present components (a)-(j) and PTFE and selected brominated flame retardants, then melt compounded at 425°F (218°C). Specimens 125 mil (1/8") thick are then injection molded from this formulation using a Boy Injection Molder at 450°F (232°C). The specimens are tested for flame retardancy according to the UL-94 vertical burn test specifications.

The specimens containing the present compounds selected from components (a)-(j) together with PTFE and brominated flame retardants exhibit flame retardancy.

### Example 11

Fiber grade polypropylene is dry blended with an additive selected from the present components (a)-(j), PTFE and a select brominated flame retardant and then melt compounded at 234°C (450°F) into pellets. The pelletized fully formulated resin is then spun at 246°C (475°F) into fiber using a Hills laboratory model fiber extruder. The spun tow of 41 filaments is stretched at a ratio of 1:3.2 to give a final denier of 615/41.

Socks are knitted from the stabilized polypropylene fiber on a Lawson-Hemphill Analysis Knitter and tested under NFPA 701 vertical burn procedure. The time in seconds for the knitted sock to extinguish after the insult flame is removed is reported as "After Flame". Both the maximum time for any one replicate and the total time for ten replicates are measured. Efficacy as a flame retardant is demonstrated when low After Flame times are observed relative to a blank sample containing no flame retardant.

The specimens containing the present compounds selected from components (a)-(j) together with PTFE and brominated flame retardants exhibit flame retardancy.

### Example 12

Film grade polyethylene is dry blended with the with an additive selected from the present components (a)-(j), together with PTFE and a select brominated flame retardant, and then melt compounded into pellets. The pelletized fully formulated resin is then blown at 205°C using a MPM Superior Blown film extruder.

The films are tested for flame retardancy under NFPA 701 test conditions. The specimens containing the present compounds selected from (a)-(j) together with PTFE and brominated flame retardants exhibit flame retardancy.

Film grade polypropylene is handled in a similar fashion and polypropylene films containing the instant component also show flame retardancy.

### Example 13

Molded test specimens are prepared by injection molding thermoplastic olefin (TPO) pellets containing a present test compound selected from compounds (a)-(j) and a select brominated flame retardant together with PTFE. The TPO formulations may also contain a pigment, a phosphite, a phenolic antioxidant or hydroxylamine, a metal stearate, a UV absorber or a hindered amine stabilizer or a mixture of hindered amine and UV absorber.

Pigmented TPO formulation composed of polypropylene blended with a rubber modifier where the rubber modifier is an in-situ reacted copolymer or blended product containing copolymers of propylene and ethylene with or without a ternary component such as ethylidene norbornene are stabilized with a base stabilization system consisting of an N,N-dialkylhydroxylamine or a mixture of hindered phenolic antioxidant and an organophosphorus compound.

The TPO plaques are tested for flame retardancy using the UL-94 Vertical Bum conditions. A minimum of three replicates are tested. Efficacy as a flame retardant is measured relative to a blank sample containing no flame retardant.

The specimens containing the present compounds (a)-(j), PTFE and brominated flame retardants exhibit flame retardancy.

### Example 14

Film grade ethylene/vinyl acetate (EVA) copolymers containing 20 weight percent or less of vinyl acetate are dry blended with test additives and then melt compounded into pellets. The pelletized fully formulated resin is then blown into a film at 205°C using a MPM Superior Blown-film extruder.

The films are tested for flame retardancy under NFPA 701 test conditions. The films containing the present compounds selected from components (a)-(j) together with PTFE and brominated flame retardants exhibit flame retardancy.

Film grade low density polyethylene (LDPE) which contains some linear low density polyethylene (LLDPE) and/or ethylene/vinyl acetate (EVA) are dry blended with test additives and blown into film as described above for EVA copolymer resin. The films are tested for flame retardancy under NFPA 701 test conditions and those containing the present compounds selected from components (a)-(j) together with PTFE and brominated flame retardants exhibit flame retardancy.

### Example 15

High impact polystyrene (HIPS) polymer **(STYRON^{®}** 484C, Dow Chemical Co.) is compounded with a present compound of components (a)-(j) together with PTFE and a selected brominated flame retardant, pelletized and then injection or compression molded into plaques. These plaques are tested for flame retardant efficacy using cone calorimetry, LOI or UL-94 test method.

The plaques containing an instant compound of component (a)-(j), PTFE and a select brominated flame retardant exhibit flame retardancy. Flame retardant HIPS polymers find application in housings for business machines.

### Example 16

This Example shows the efficacy of the present compounds in PVC formulations. Such formulations are useful in flexible or rigid PVC and in wire and cable applications.

Typical formulations are seen below:

| Component | parts | parts | parts | parts |
|---|---|---|---|---|
| PVC resin | 100 | 100 | 100 | 100 |
| tin mercaptide | 1.5 | -- | 2.0 | -- |
| tin carboxyate | -- | 2.5 | -- | 2.0 |
| process aid | 1.5 | 1.5 | 2.0 | 2.0 |
| impact mod. | 6.0 | 6.0 | 7.0 | 7.0 |
| paraffin wax | 1.0 | 0.3 | 1.0 | 1.0 |
| polyethyl wax | 0.1 | 0.1 | 0.2 | 0.2 |
| Ca stearate | 1.0 | -- | 0.8 | -- |
| pigment | 1.0 | 0.9 | 5.0 | 5.0 |

Fully formulated PVC containing one of the present compounds (a)-(j) together with PTFE and a known halogenated flame retardant is pelletized and then injection molded into test plaques for examination of flame retardancy using the UL-94 or LOI test method.

The PVC plaques containing the instant compounds (a)-(j), PTFE and a classic halogenated flame retardant demonstrate flame retardancy.

### Example 17

Fiber grade poly(ethylene terephthalate) (PET) is dry blended with a test additive (a)-(j), PTFE and a classic brominated flame retardant, then melt compounded at 550°F and then pelletized. The polyester pellets are dried at 175°F for 24 hours under vacuum. The dried pellets are extruded into fibers using a Hills laboratory scale fiber extruder at 550°F. Socks are knitted from these fibers and tested for flame retardancy according to NFPA 701 test method.

The fibers containing both a present compound (a)-(j), PTFE and a classic brominated flame retardant exhibit enhanced flame retardancy compared to the classic flame retardant alone.

### Example 18

Thermoplastic resins including polypropylene, polyethylene homopolymer, polyolefin copolymer or thermoplastic olefins (TPO), high impact polystyrene (HIPS) and ABS are dry blended with an instant compound (a)-(j), PTFE and a classic brominated flame retardant and then melt compounded into pellets. The pelletized fully formulated resin is then processed into a useful article such as extrusion into fiber; blown or cast extrusion into film; blow molded into bottles; injection molded into molded articles, thermoformed into molded articles, extruded into wire and cable housing or rotation molded into hollow articles.

The articles containing the instant compounds (a)-(j) together with PTFE and a known brominated flame retardant exhibit flame retardancy when tested by a known standard test method.

Polyethylene wire and cable applications are tested for flame retardancy according to ASTM D-2633-82 burn test method. The materials containing the instant compounds of components (a)-(j) together with PTFE and a brominated flame retardant show flame retardancy.

### Example 19

Articles prepared according to Example 18 which additionally contain an organophosphorus stabilizer selected from the group consisting of tris(2,4-di-tert-butylphenyl) phosphite, bis(2,4-di-tert-butyl-6-methylphenyl) ethyl phosphite, 2,2',2"-nitrilo[triethyl-tris-(3,3',5,5'-tetra-tert-butyl-1,1'-biphenyl-2,2'-diyl) phosphite], tetrakis(2,4-di-butylphenyl) 4,4'-biphenylenediphosphonite, tris(nonylphenyl) phosphite, bis(2,4-di-tert-butylphenyl) pentaerythrityl diphosphite, 2,2'-ethylidenebis(2,4-di-tert-butylphenyl) fluorophosphite and 2-butyl-2-ethylpropan-1,3-diyl 2,4,6-tri-tert-butylphenyl phosphite exhibit good flame retardancy properties.

### Example 20

Articles prepared according to Example 18 which additionally contain a o-hydroxyphenyl-2H-benzotriazole, a hydroxyphenyl benzophenone or a o-hydroxyphenyl-s-triazine UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-α-cumyl-5-tert-octylphenyl)-2H-benzotriazole, 2,4-di-tert-butylphenyl 3,5-di-tert-butyl4-hydroxybenzoate, 2-hydroxy-4-n-octyloxybenzophenone and 2,4-bis(2,4-dimethyphenyl)-6-(2-hydroxy-4-octyloxyphenyl)-s-triazine exhibit good flame retardancy.

### Example 21

Articles prepared according to Example 18 which additionally contain a o-hydroxyphenyl-2H-benzotriazole, a hydroxyphenyl benzophenone or a o-hydroxyphenyl-s-triazine UV absorber selected from the group consisting of 2-(2-hydroxy-3,5-di-α-cumylphenyl)-2H-benzotriazole, 2-(2-hydroxy-5-methylphenyl)-2H-benzotriazole, 5-chloro-2-(2-hydroxy-3,5-di-tert-butylphenyl)-2H-benzotriazole, 2-(2-hydroxy-3,5-di-tert-amylphenyl)-2H-benzotriazole, 2-(2-hydroxy-3-α-cumyl-5-tert-octylphenyl)-2H-benzotriazole, 2,4-di-tert-butylphenyl 3,5-di-tert-butyl4-hydroxybenzoate, 2-hydroxy-4-n-octyloxybenzophenone and 2,4-bis(2,4-dimethyphenyl)-6-(2-hydroxy-4-octyloxyphenyl)-s-triazine exhibit good flame retardancy properties.

### Example 22

Examples 1-21 are repeated where the compound of components (a)-(j) is selected from
(a) the reaction product of 2,4-bis[(1-cyclohexyloxy-2,2,6,6-piperidin-4-yl)butylamino]-6-chloro-s-triazine with N,N'-bis(3-aminopropyl)ethylenediamine) [CAS Reg. No. 191680-81-6];
(b) 1-cyclohexyloxy-2,2,6,6-tetramethyl-4-octadecylaminopiperidine;
(c) bis(1-octyloxy-2,2,6,6-tetramethylpiperidin-4-yl) sebacate;
(d) 2,4-bis[(1-cyclohexyloxy-2,2,6,6-tetramethylpiperidin-4-yl)butylamino]-6-(2-hydroxyethylamino-s-triazine; or
(i) 1-(2-hydroxy-2-methylpropoxy)-4-octadecanoyloxy-2,2,6,6-tetramethylpiperidine;
and the halogenated flame retardant is selected from
decabromodiphenyl oxide (DBDPO; SAYTEX^{®} 102E),
tris[3-bromo-2,2-bis(bromomethyl)propyl] phosphate (PB 370^{®}, FMC Corp.),
bis(2,3-dibromopropyl ether) of bisphenol A (PE68),
ethylene-bis(tetrabromophthalimide) (SAYTEX^{®} BT-93),
1,2-bis(tribromophenoxy)ethane (FF680),
tetrabromo-bisphenol A (SAYTEX^{®} RB100),
ethylene bis-(dibromo-norbomanedicacboximide) (SAYTEX^{®} BN-451), or tris-(2,3-dibromopropyl)-isocyanurate.

Formulations containing an instant stabilizer selected from compounds (a)-(j) and a brominated flame retardant achieve good flame retardancy.

## Claims

1. A flame retardant composition which comprises
(A) an organic polymer substrate,
(B) an effective flame retarding amount of a mixture of
(i.) at least one sterically hindered amine of the nitroxyl, hydroxylamine; alkoxyamine or hydroxyalkoxyamine class,
(ii.) at least one fluorinated polyolefin-and
(iii.) at least one compound selected from the group consisting of the halogenated flame retardants.

2. A composition according to claim 1 containing no antimony compounds or antimony compounds in an amount less than 1 % by weight based on the weight of the polymer component A.

3. A composition according to claim 1 containing filler in an amount less than than 3 % by weight based on the weight of the polymer component A.

4. A composition according to claim 1 in which the polymer component A is a thermoplastic polymer.

5. A composition according to claim 1 in which the polymer component A is selected from the group of resins consisting of the polyolefins, the thermoplastic olefins, styrenic polymers and copolymers, ABS and polymers which contain hetero atoms, double bonds or, aromatic rings; especially wherein component A is selected from the group of resins consisting of polyethylene, polypropylene or copolymers thereof.

6. A composition according to claim 1 in which the sterically hindered amine of the nitroxyl, hydroxylamine, alkoxyamine or hydroxyalkoxyamine class is compound containing a group of the formula (I) or (II) 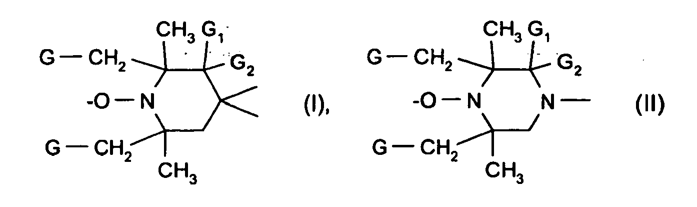
in which G is hydrogen or methyl, and G₁ and G₂, independently of one another, are hydrogen, methyl or together are a substituent =O,
and has a molecular weight from the range 170 - 10000 g/mol.

7. A composition according to claim 6 wherein the sterically hindered amine is selected from the compounds
(a) the reaction product of 2,4-bis[(1-cyclohexyloxy-2,2,6,6-piperidin-4-yl)butylamino]-6-chloro-s-triazine with N,N'-bis(3-aminopropyl)ethylenediamine);
(b) 1-cyclohexyloxy-2,2,6,6-tetramethyl-4-octadecylaminopiperidine;
(c) bis(1-octyloxy-2,2,6,6-tetramethylpiperidin-4-yl) sebacate;
(d) 2,4-bis[(1-cyclohexyloxy-2,2,6,6-tetramethylpiperidin-4-yl)butylamino]-6-(2-hydroxyethylamino-s-triazine;
(e) bis(1-cyclohexyloxy-2,2,6,6-tetramethylpiperidin-4-yl) adipate;
(h) 2,4-bis[(1-cyclohexyloxy-2,2,6,6-piperidin-4-yl)butylamino]-6-chloro-s-triazine;
(i) 1-(2-hydroxy-2-methylpropoxy)4-octadecanoyloxy-2,2,6,6-tetramethylpiperidine; or
(j) the compound of formula 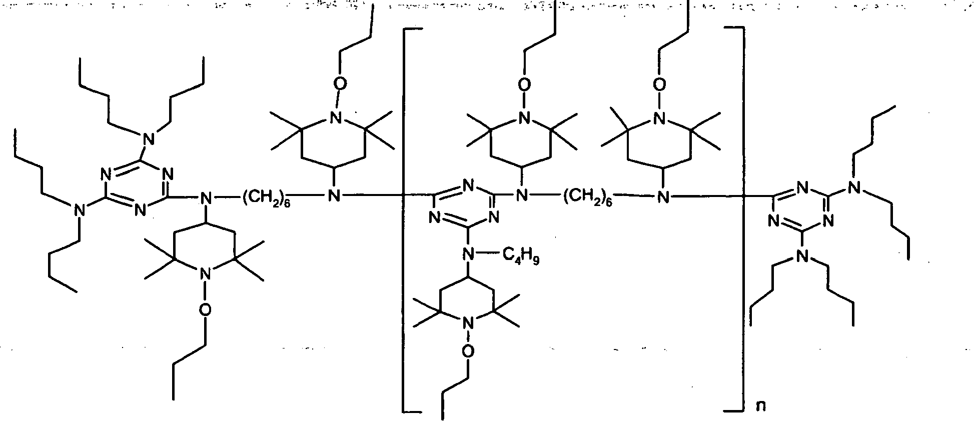 in which n is from 1 to 15.

8. A composition according to claim 1 in which the fluorinated polyolefin (component ii) is selected from polytetrafluoroethylene, tetrafluoroethylene-hexafluoropropylene resin or copolymers thereof prepared using minor amounts of fluorine-free ethylenically unsaturated monomers.

9. A composition according to claim 9 in which the fluorinated polyolefin (component ii) is polytetrafluoroethylene of particle size below 1000 micron.

10. A composition according to claim 1 in which the sterically hindered amine of component (i) is contained in an amount from 0.1 to 10% by weight based on the weight of the polymeric substrate (A); and in which the fluorinated polyolefin (component ii) is contained in an amount from 0.01 to 2% by weight based on the weight of the polymeric substrate (A).

11. A composition according to claim 1 in which the halogenated flame retardant of component (iii) is selected from the group consisting of organic aromatic halogenated compounds; organic cycloaliphatic or polycycloaliphatic halogenated compounds; and organic aliphatic halogenated compounds.

12. A composition according to claim 11 in which the halogenated flame retardant of component (iii) is selected from the group consisting of
chloroalkyl phosphate esters,
polybrominated diphenyl oxide,
decabromodiphenyl oxide,
tris[3-bromo-2,2-bis(bromomethyl)propyl] phosphate,
bis(2,3-dibromopropyl ether) of bisphenol A,
brominated epoxy resin,
ethylene-bis(tetrabromophthalimide),
bis(hexachlorocyclopentadieno)cyclooctane,
chlorinated paraffins,
1,2-bis(tribromophenoxy)ethane,
tetrabromo-bisphenol A,
ethylene bis-(dibromo-norbornanedicarboximide), bis-(hexachlorocyclopentadieno) cyclooctane, tris-(2,3-dibromopropyl)-isocyanurate, and ethylene-bis-tetrabromophthalimide.

13. A composition according to claim 1 containing a further component selected from the group consisting of pigments, dyes, plasticizers, phenolic antioxidants, thixotropic agents, levelling assistants, basic costabilizers, nitrone stabilizers, amine oxide stabilizers, benzofuranone stabilizers, UV absorbers, sterically hindered amines, metal passivators, metal oxides, organophosphorus compounds, hydroxylamines, non-halogenated flame retardants, and mixtures thereof;

14. A process for imparting light stability and flame retardancy to an organic polymeric substrate; which process comprises adding to said polymeric substrate a mixture of
(i.) a sterically hindered amine of the nitroxyl, hydroxylamine, alkoxyamine or hydroxyalkoxyamine class,
(ii.) a fluorinated polyolefin and
(iii.) at least one compound selected from the group consisting of the halogenated flame retardants.

15. A flame retardant additive combination comprising
(i.) a sterically hindered amine of the nitroxyl, hydroxylamine, alkoxyamine or hydroxyalkoxyamine class
(ii.) a fluorinated polyolefin and
(iii.) at least one compound selected from the group consisting of the halogenated flame retardants.

16. A molded polymer article comprising-
(i.) a sterically hindered amine of the nitroxyl, hydroxylamine, alkoxyamine or hydroxyalkoxyamine class,
(ii.) a fluorinated polyolefin and
(iii.) at least one compound selected from the group consisting of the halogenated flame retardants.

## Patentansprüche

1. Flamm-hemmende Zusammensetzung, die umfasst
(A) ein organisches Polymer-Substrat,
(B) eine wirksame Flamm-hemmende Menge von einem Gemisch von
(i) mindestens einem sterisch gehinderten Amin von der Nitroxyl-, Hydroxylamin-, Alkoxyamin- oder Hydroxyalkoxyamin-Klasse,
(ii) mindestens einem fluorierten Polyolefin und
(iii) mindestens einer Verbindung, ausgewählt aus der Gruppe, bestehend aus den halogenierten Flamm-hemmenden Mitteln.

2. Zusammensetzung nach Anspruch 1, die keine Antimon-Verbindungen oder Antimon-Verbindungen in einer Menge von weniger als 1 Gew.-%, bezogen auf das Gewicht der Polymer-Komponente (A), enthält.

3. Zusammensetzung nach Anspruch 1, die einen Füllstoff in einer Menge von weniger als 3 Gew.-%, bezogen auf das Gewicht der Polymer-Komponente A, enthält.

4. Zusammensetzung nach Anspruch 1, worin die Polymer-Komponente A ein thermoplastisches Polymer ist.

5. Zusammensetzung nach Anspruch 1, worin die Polymer-Komponente A ausgewählt ist aus der Gruppe von Harzen, bestehend aus den Polyolefinen, den thermoplastischen Olefinen, Styrol-Polymeren und Copolymeren, ABS und Polymeren, die Hetero-Atome, Doppel-Bindungen oder aromatische Ringe enthalten; insbesondere worin Komponente A ausgewählt ist aus der Gruppe von Harzen, bestehend aus Polyethylen, Polypropylen oder Copolymeren davon.

6. Zusammensetzung nach Anspruch 1, worin das sterisch gehinderte Amin von der Nitroxyl-, Hydroxylamin-, Alkoxyamin-oder Hydroxyalkoxyamin-Klasse eine Verbindung darstellt, die eine Gruppe der Formel (I) oder (II) enthält 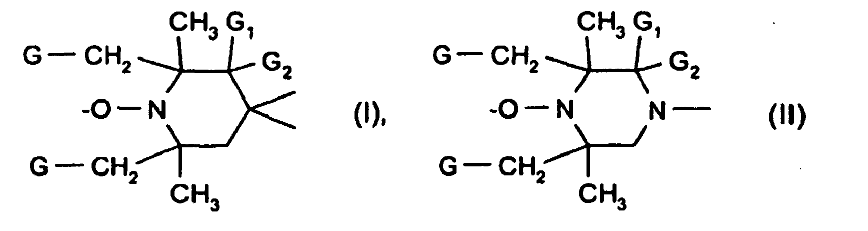
worin G Wasserstoff oder Methyl darstellt und G₁ und G₂ unabhängig voneinander Wasserstoff, Methyl darstellen oder zusammen einen Substituenten =O bedeuten,
und ein Molekulargewicht aus dem Bereich 170 bis 10 000 g/Mol aufweist.

7. Zusammensetzung nach Anspruch 6, worin das sterisch gehinderte Amin ausgewählt ist aus den Verbindungen
(a) dem Reaktionsprodukt von 2,4-Bis-[(1-cyclohexyloxy-2,2,6,6-piperidin-4-yl)-butylamino] -6-chlor-s-triazin mit N,N'-Bis-(3-aminopropyl)-ethylen-diamin);
(b) 1-Cyclohexyloxy-2, 2, 6, 6-tetramethyl-4-octadecyl-amino-piperidin;
(c) Bis-(1-octyloxy-2,2,6,6-tetramethylpiperidin-4-yl)-sebacat;
(d) 2,4-Bis-[(1-cyclohexyloxy-2,2,6,6-tetramethylpiperidin-4-yl)-butylamino]-6-(2-hydroxyethylamino-s-triazin;
(e) Bis-(1-cyclohexyloxy-2,2,6,6-tetramethylpiperidin-4-yl)-adipat;
(h) 2,4-Bis-[(1-cyclohexyloxy-2,2,6,6-piperidin-4-yl)-butylamino]-6-chlor-s-triazin;
(i) 1-(2-Hydroxy-2-methylpropoxy)-4-octadecanoyloxy-2,2,6,6-tetramethylpiperidin; oder
(j) der Verbindung der Formel 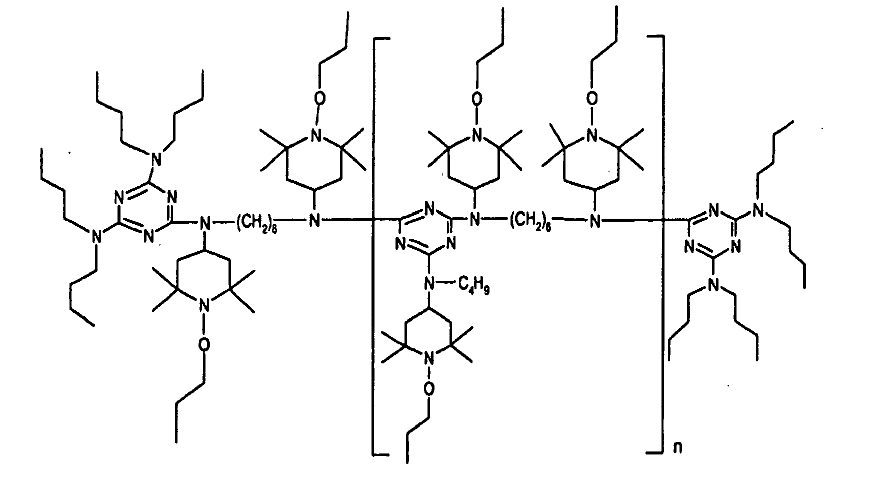
worin n von 1 bis 15 ist.

8. Zusammensetzung nach Anspruch 1, worin das fluorierte Polyolefin (Komponente ii) ausgewählt ist aus Polytetrafluorethylen, Tetrafluorethylen-Hexafluorpropylen-Harz oder Copolymeren davon, hergestellt unter Verwendung von geringen Mengen von Fluor-freien ethylenisch ungesättigten Monomeren.

9. Zusammensetzung nach Anspruch 8, worin das fluorierte Polyolefin (Komponente ii) Polytetrafluorethylen mit einer Teilchengröße unter 1000 Mikrometer ist.

10. Zusammensetzung nach Anspruch 1, worin das sterisch gehinderte Amin von Komponente (i) in einer Menge von 0,1 bis 10 Ges.-%, bezogen auf das Gewicht von dem polymeren Substrat (A), enthalten ist und worin das fluorierte Polyolefin (Komponente ii) in einer Menge von 0,01 bis 2 Gew.-%, bezogen auf das Gewicht von dem polymeren Substrat (A), enthalten ist.

11. Zusammensetzung nach Anspruch 1, worin das halogenierte Flamm-hemmende Mittel von Komponente (iii) ausgewählt ist aus der Gruppe, bestehend aus organischen aromatischen halogenierten Verbindungen; organischen cycloaliphatischen oder polycycloaliphatischen halogenierten Verbindungen und organischen aliphatischen halogenierten Verbindungen.

12. Zusammensetzung nach Anspruch 11, worin das halogenierte Flamm-hemmende Mittel von Komponente (iii) ausgewählt ist aus der Gruppe, bestehend aus
Chloralkyl-phosphat-estern,
polybromiertem Diphenyloxid,
Decabromdiphenyloxid,
Tris-[3-brom-2,2,bis-(brommethyl)-propyl]-phosphat,
Bis-(2,3-dibrompropyl-ether) von Bisphenol A,
bromiertem Epoxid-Harz,
Ethylen-bis-(tetrabromphthalimid),
Bis-(hexachlorcyclopentadieno)-cyclooctan,
chlorierten Paraffinen,
1,2-Bis-(tribromphenoxy)-ethan,
Tetrabrom-Bisphenol A,
Ethylen-bis-(dibrom-norbornan-dicarboximid),
Bis-(hexachlor-cyclopentadieno)-cyclooctan,
Tris-(2,3-dibrompropyl)-isocyanurat und
Ethylen-bis-tetrabrom-phthalimid.

13. Zusammensetzung nach Anspruch 1, enthaltend eine weitere Komponente, ausgewählt aus der Gruppe, bestehend aus Pigmenten, Farbstoffen, Weichmachern, phenolischen Antioxidantien, thixotropen Mitteln, Nivellier-Hilfen bzw. Verlaufmitteln, basischen Costabilisatoren, Nitron-Stabilisatoren, Aminoxid-Stabilisatoren, Benzofuranon-Stabilisatoren, UV-Absorptionsmitteln, sterisch gehinderten Aminen, Metall-Passivatoren, Metalloxiden, Organophosphor-Verbindungen, Hydroxylaminen, nicht-halogenierten Flamm-hemmenden Mitteln und Gemischen davon.

14. Verfahren zum Verleihen von Licht-Stabilität und Flamm-Hemmung einem organischen polymeren Substrat, wobei das Verfahren Zusetzen zu dem polymeren Substrat von einem Gemisch von
(i) einem sterisch gehinderten Amin von der Nitroxyl-, Hydroxylamin-, Alkoxyamin- oder Hydroxyalkoxyamin-Klasse,
(ii) einem fluorierten Polyolefin und
(iii) mindestens einer Verbindung, ausgewählt aus der Gruppe, bestehend aus den halogenierten Flamm-hemmenden Mitteln,
umfasst.

15. Flamm-hemmende Additiv-Kombination, umfassend
(i) ein sterisch gehindertes Amin von der Nitroxyl-, Hydroxylamin-, Alkoxyamin- oder Hydroxyalkoxyamin-Klasse,
(ii) ein fluoriertes Polyolefin und
(iii) mindestens eine Verbindung, ausgewählt aus der Gruppe, bestehend aus den halogenierten Flamm-hemmenden Mitteln.

16. Polymer-Formgegenstand, umfassend
(i) ein sterisch gehindertes Amin von der Nitroxyl-, Hydroxylamin-, Alkoxyamin- oder Hydroxyalkoxyamin-Klasse,
(ii) ein fluoriertes Polyolefin und
(iii) mindestens eine Verbindung, ausgewählt aus der Gruppe, bestehend aus den halogenierten Flamm-hemmenden Mitteln.

## Revendications

1. Composition ignifuge qui comprend
(A) un substrat polymère organique,
(B) une quantité ignifuge efficace d'un mélange
(i.) d'au moins une amine stériquement encombrée de la classe des nitroxyle, hydroxylamine, alcoxyamine ou hydroxylalcoxyamine,
(ii.) d'au moins une poly(oléfine) fluorée et
(iii.) d'au moins un composé choisi dans le groupe constitué par les ignifuges halogénés.

2. Composition selon la revendication 1, ne contenant pas de composés d'antimoine ou bien contenant des composés d'antimoine en une quantité inférieure à 1 % en poids par rapport au poids du composant polymère A.

3. Composition selon la revendication 1, contenant une charge en une quantité inférieure à 3 % en poids par rapport au poids du composant polymère A.

4. Composition selon la revendication 1, dans laquelle le composant polymère A est un polymère thermoplastique.

5. Composition selon la revendication 1, dans laquelle le composant polymère A est choisi dans le groupe des résines constitué par les poly(oléfines), les oléfines thermoplastiques, les polymères et copolymères styréniques, l'ABS et les polymères qui contiennent des hétéroatomes, des doubles liaisons ou des cycles aromatiques ; dans laquelle en particulier le composant A est choisi dans le groupe des résines constitué par le poly(éthylène), le poly(propylène) ou leurs copolymères.

6. Composition selon la revendication 1, dans laquelle l'amine stériquement encombrée de la classe des nitroxyle, hydroxylamine, alcoxyamine ou hydroxylalcoxyamine est un composé contenant un groupe de formule (I) ou (II) 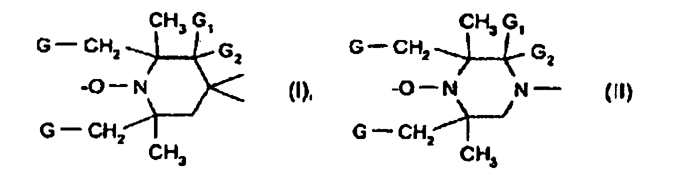
dans lesquelles G est un atome d'hydrogène ou un groupe méthyle, et G₁ et G₂, indépendamment l'un de l'autre, sont un atome d'hydrogène, un groupe méthyle ou représentent ensemble un substituant =O,
et a une masse moléculaire dans la gamme de 170 à 10 000 g/mol.

7. Composition selon la revendication 6, dans laquelle l'amine stériquement encombrée est choisie parmi les composés suivants
(a) le produit de réaction de la 2,4-bis[(1-cyclohexyloxy-2,2,6,6-pipéridin-4-yl)butylamino]-6-chloro-s-triazine avec la N,N'-bis(3-aminopropyl)éthylènediamine) ;
(b) la 1-cyclohexyloxy-2,2,6,6-tétraméthyl-4-octadécylaminopipéridine;
(c) le sébacate de bis(1-octyloxy-2,2,6,6-tétraméthylpipéridin-4-yle) ;
(d) la 2,4-bis[(1-cyclohexyloxy-2,2,6,6-tétraméthylpipéridin-4-yl)butylamino]-6-(2-hydroxyéthylamino-s-triazine ;
(e) l'adipate de bis(1-cyclohexyloxy-2,2,6,6-tétraméthylpipéridin-4-yle) ;
(h) la 2,4-bis[(1-cyclohexyloxy-2,2,6,6-pipéridin-4-yl)butylamino]-6-chloro-s-triazine ;
(i) la 1-(2-hydroxy-2-méthylpropoxy)-4-octadécanoyloxy-2,2,6,6-tétraméthylpipéridine ; ou
(j) le composé de formule 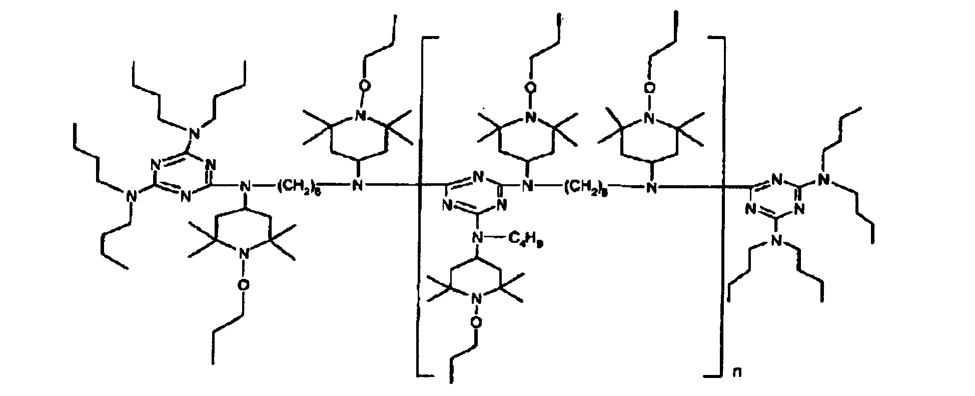 dans laquelle n vaut de 1 à 15.

8. Composition selon la revendication 1, dans laquelle la poly(oléfine) fluorée (composant ii) est choisie parmi le poly(tétrafluoroéthylène), une résine de tétrafluoroéthylène-hexafluoropropylène ou l'un de ses copolymères préparés en utilisant des quantités mineures de monomères éthyléniquement insaturés et dépourvus de fluor.

9. Composition selon la revendication 8, dans laquelle la poly(oléfine) fluorée (composant ii) est du poly(tétrafluoroéthylène) de taille de particule inférieure à 1 000 microns.

10. Composition selon la revendication 1, dans laquelle l'amine stériquement encombrée du composant (i) est présente en une quantité de 0,1 à 10 % en poids par rapport au poids du substrat polymère (A) ; et dans laquelle la poly(oléfine) fluorée (composant ii) est présente en une quantité de 0,01 à 2 % en poids par rapport au poids du substrat polymère (A).

11. Composition selon la revendication 1, dans laquelle l'ignifuge halogéné du composant (iii) est choisi dans le groupe constitué par les composés halogénés aromatiques organiques ; les composés halogénés cycloaliphatiques ou polycycloaliphatiques organiques ; et les composés halogénés aliphatiques organiques.

12. Composition selon la revendication 11, dans laquelle l'ignifuge halogéné du composant (iii) est choisi dans le groupe constitué par
les esters de chloroalkyl phosphate,
le diphényl oxyde polybromé,
l'oxyde de décabromodiphényle,
le phosphate de tris[3-bromo-2,2-bis(bromométhyl)propyle],
le bis(2,3-dibromopropyl éther) de bisphénol A,
une résine époxy bromée,
l'éthylène-bis(tétrabromophtalimide),
le bis(hexachlorocyclopentadiéno)cyclooctane,
les paraffines chlorées,
le 1,2-bis(tribromophénoxy)éthane,
le tétrabromo-bisphénol A,
l'éthylène bis-(dibromo-norbornanedicarboximide),
le bis-(hexachlorocyclopentadiéno)cyclooctane,
le tris-(2,3-dibromopropyl)isocyanurate, et
l'éthylène-bis-tétrabromophtalimide.

13. Composition selon la revendication 1, contenant un composant supplémentaire choisi dans le groupe constitué par les pigments, les teintes, les plastifiants, les antioxydants phénoliques, les agents thixotropes, les assistants au nivellement, les costabilisants basiques, les stabilisants de nitrone, les stabilisants d'oxyde d'amine, les stabilisants de benzofuranone, les agents anti-UV, les amines stériquement encombrées, les passivants de métaux, les oxydes de métaux, les composés organophosphorés, les hydroxylamines, les ignifuges non halogénés et leurs mélanges.

14. Procédé destiné à communiquer une stabilité à la lumière et un caractère ignifuge à un substrat polymère organique, qui comprend l'étape consistant à ajouter audit substrat polymère un mélange
(i.) d'une amine stériquement encombrée de la classe des nitroxyle, hydroxylamine, alcoxyamine ou hydroxylalcoxyamine,
(ii.) d'une poly(oléfine) fluorée et
(iii.) d'au moins un composé choisi dans le groupe constitué par les ignifuges halogénés.

15. Combinaison additive d'ignifuge comprenant
(i.) une amine stériquement encombrée de la classe des nitroxyle, hydroxylamine, alcoxyamine ou hydroxylalcoxyamine,
(ii.) une poly(oléfine) fluorée et
(iii.) au moins un composé choisi dans le groupe constitué par les ignifuges halogénés.

16. Article polymère moulé comprenant
(i.) une amine stériquement encombrée de la classe des nitroxyle, hydroxylamine, alcoxyamine ou hydroxylalcoxyamine,
(ii.) une poly(oléfine) fluorée et
(iii.) au moins un composé choisi dans le groupe constitué par les ignifuges halogénés.
